# EUROPEAN PATENT SPECIFICATION

(11) **EP 3 933 955 B1**
(45) Date of publication and mention of the grant of the patent: **19.02.2025**
(21) Application number: 19919444.0
(22) Date of filing: 25.07.2019
(51) Int. Cl.: H01M 10/613, H01M 10/625, H01M 10/647, H01M 10/6556, H01M 10/6567, H01M 50/103, H01M 50/131, H01M 50/209, H01M 50/249, H01M 50/267, H01M 50/367

(54) **POWER BATTERY PACK, ENERGY STORAGE DEVICE AND ELECTRIC VEHICLE**
AKKUPACK, ENERGIESPEICHERVORRICHTUNG UND ELEKTRISCHES FAHRZEUG
BLOC-BATTERIE D'ALIMENTATION, DISPOSITIF DE STOCKAGE D'ÉNERGIE ET VÉHICULE ÉLECTRIQUE

(30) Priority: 08.03.2019 CN 201910176889
(43) Date of publication of application: 05.01.2022
(73) Proprietor: BYD Company Limited, Shenzhen, Guangdong 518118 (CN)
(72) Inventor: SUN, Huajun, Shenzhen, Guangdong 518118 (CN); LU, Zhipei, Shenzhen, Guangdong 518118 (CN); TANG, Jianglong, Shenzhen, Guangdong 518118 (CN); JIANG, Wenfeng, Shenzhen, Guangdong 518118 (CN); ZHU, Yan, Shenzhen, Guangdong 518118 (CN)
(74) Representative: Dehns Germany Partnerschaft mbB
(86) International application number: PCT/CN2019/097641
(87) International publication number: WO 2020/181705

(56) References cited:
- EP-A1- 3 386 001
- EP-A1- 3 783 688
- CN-A- 102 903 875
- CN-A- 106 654 450
- CN-A- 109 166 995
- CN-U- 206 367 371
- CN-U- 206 878 064
- JP-U- S5 362 627

## Description

### CROSS-REFERENCE TO RELATED APPLICATIONS

The present disclosure is based upon and claims priority to Chinese Patent Application No. 201910176889.1, filed on March 08, 2019.

### FIELD

The present disclosure relates to the field of power battery pack technologies, and specifically, to a power battery pack, an energy storage device using the power battery pack, and an electric vehicle using the power battery pack.

### BACKGROUND

In the related art, a power battery pack mainly includes an accommodating device and a plurality of battery modules mounted in the accommodating device. The battery module is assembled mainly by using a plurality of cells, and the accommodating device usually includes a bottom plate and side beams, the side beams being arranged around the bottom plate. To make the accommodating device have sufficient strength, and for convenience of mounting the battery module, a plurality of transverse beams and longitudinal beams are disposed between the side beams. The plurality of transverse beams and longitudinal beams, the side beams, and the bottom plate together define a plurality of accommodating spaces for accommodating the battery modules, and each battery module is arranged in a corresponding accommodating space.

The power battery pack has at least the following defects:
1. Due to the existence of the transverse beams and the longitudinal beams, the volume utilization of the accommodating device is relatively low, which is about 40%, and a quantity of cells that can be mounted is limited. As a result, the endurance capacity of the power battery pack cannot be effectively improved.
2. A conventional power battery pack includes a relatively large quantity of battery modules. In an assembly process, each battery module needs to be fixed to the transverse beam. A large quantity of fasteners such as screws need to be used to tightly fix the modules. In addition, the transverse beam or the longitudinal beam has a specific weight, leading to an increase in the weight of the accommodating device.
3. The transverse beams and longitudinal beams are disposed in the accommodating device, and the structure is complex, which increases the complexity of the manufacturing process of the accommodating device.
4. The cells need to be assembled into a battery module before being arranged in the accommodating device. The operation steps are complex.

In addition, to facilitate arrangement of the battery module, the accommodating device is generally designed to be a square or a rectangle, which has a relative low degree of matching with a shape of a chassis of a vehicle body and has a relatively low mounting area utilization of the chassis of the vehicle body. As a result, a quantity of cells mounted on the vehicle body is reduced, and an endurance capacity of a vehicle is weakened.
Further background art can be found in EP 3 783 688 A1, EP 3 386 001 A1, JP S53 62627 U, CN 102903875 A, CN 106654450 A, CN 109166995 A, and CN 206878064 U.

### SUMMARY

The present disclosure provides a power battery pack according to claim 1, an energy storage device according to claim 18 using the power battery pack, and an electric vehicle according to claim 18 using the power battery pack. The dependent claims are directed to optional features and preferred embodiments. The power battery pack can effectively improve the volume utilization of an accommodating device, thereby improving an endurance power capability of the power battery pack.

To achieve the foregoing objective, the present disclosure provides a power battery pack, including an accommodating device and a plurality of cells disposed in the accommodating device, where the accommodating device includes a plurality of accommodating regions, each accommodating region has a first side edge and a second side edge disposed opposite to each other along a first direction and cells disposed between the first side edge and the second side edge, a distance between the first side edge and the second side edge along the first direction varies with different accommodating regions, each cell includes a first end and a second end opposite to each other, and a distance between the first end and the second end of at least one cell matches a distance between a corresponding first side edge and a corresponding second side edge.

According to some embodiments of the present disclosure, the first end of the at least one cell is supported on the corresponding first side edge, and the second end of the cell is supported on the corresponding second side edge.

According to some embodiments of the present disclosure, a length direction of the cell is substantially perpendicular to the first side edge and the second side edge; and in each accommodating region, the distance between the first end and the second end of the cell is L1, and a distance between an inner surface of the first side edge and an inner surface of the second side edge is L2, where L1/L2≥50%.

According to some embodiments of the present disclosure, the plurality of accommodating regions include a center region and two side regions located at two opposite sides of the center region, and a distance between the first side edge and the second side edge in the center region is greater than a distance between the first side edge and the second side edge in the two side regions, so that the plurality of accommodating regions form a cross-shaped structure.

According to some embodiments of the present disclosure, the plurality of accommodating regions include a first region and a second region located at one side of the first region, and a distance between the first side edge and the second side edge in the first region is greater than a distance between the first side edge and the second side edge in the second region, so that the plurality of accommodating regions form a T-shaped structure.

According to some embodiments of the present disclosure, cells in different accommodating regions have a same volume and/or a same capacity.

According to some embodiments of the present disclosure, the cell is a prismatic cell and has a length, a thickness, and a height between the length and the thickness, the cell is placed laterally and vertically, the cell has the length direction being the first direction, a thickness direction being a second direction, and a height direction being a third direction, the heights of the cells in the different accommodating regions are the same, and a ratio between the lengths of the cells and a ratio between the thicknesses of the cells are reciprocals of each other.

According to some embodiments of the present disclosure, the accommodating device is a vehicle tray.

According to some embodiments of the present disclosure, the length of the cell ranges from 500 mm to 1000 mm.

According to some embodiments of the present disclosure, the accommodating device is formed on an electric vehicle.

According to some embodiments of the present disclosure, the accommodating device includes a chamber recessed downward.

According to some embodiments of the present disclosure, the chamber includes a first side wall and a second side wall opposite to each other, the first side edge is the first side wall of the chamber and an extension portion of the first side wall, and the second side edge is the second side wall of the chamber and an extension portion of the second side wall.

According to some embodiments of the present disclosure, bottom portions of the chamber are formed by the extension portion of the first side wall and the extension portion of the second side wall.

According to some embodiments of the present disclosure, 80%≤L1/L2≤97%.

According to some embodiments of the present disclosure, the plurality of cells are arranged along a second direction different from the first direction.

According to some embodiments of the present disclosure, the power battery pack includes a plurality of layers of cells along a third direction, and all the plurality of cells in each layer are located between the first side edge and the second side edge.

According to some embodiments of the present disclosure, a length direction of each of the plurality of cells is parallel to the first direction.

According to some embodiments of the present disclosure, the accommodating device further includes third side edges and fourth side edges disposed along the second direction different from the first direction, one end of the first side edge far away from the center region and one end of the second side edge far away from the center region of the two side regions are connected by the third side edge, one end of the first side edge close to the center region and one end of the second side edge close to the center region of the two side regions are respectively connected to the first side edge and the second side edge of the center region by the fourth side edge, the cells in the two side regions are arranged between the third side edge and the fourth side edge along the second direction, and the cell in the center region is arranged between the fourth side edges along the second direction.

According to some embodiments of the present disclosure, the third side edge applies a force, which points toward the two side regions, to the cell disposed adjacent to the third side edge, and the fourth side edge applies a force, which points toward the center region, to the cell disposed adjacent to the fourth side edge.

According to some embodiments of the present disclosure, the first end of each cell is fixed to the corresponding first side edge, and the second end of each cell is fixed to the corresponding second side edge.

According to some embodiments of the present disclosure, in each accommodating region, a first end plate is disposed between first ends of at least some cells of the plurality of cells and the first side edge; a second end plate is disposed between second ends of the at least some cells of the plurality of cells and the second side edge; the first ends of the at least some cells are supported on the first side edge through the first end plate, and the second ends of the at least some cells are supported on the second side edge through the second end plate; and the first end plate, the second end plate, and the at least some cells form a battery module.

According to some embodiments of the present disclosure, in each accommodating region, a module bottom plate is disposed below the at least some cells of the plurality of cells, the module bottom plate is connected between the first end plate and the second end plate, and the module bottom plate, the first end plate, the second end plate, and the at least some cells form the battery module.

According to some embodiments of the present disclosure, in each accommodating region, a module top plate is disposed above the at least some cells of the plurality of cells, the module top plate is connected between the first end plate and the second end plate, and the module top plate, the module bottom plate, the first end plate, the second end plate, and the at least some cells form the battery module.

According to some embodiments of the present disclosure, in each accommodating region, a first side plate and a second side plate opposite to each other are disposed between the first end plate and the second end plate, and the first end plate, the second end plate, the first side plate, the second side plate, the module top plate, the module bottom plate, and the at least some cells form the battery module.

According to some embodiments of the present disclosure, in each accommodating region, a module bottom plate is disposed below the at least some cells of the plurality of cells, and the at least some cells are supported on the first side edge and the second side edge through the module bottom plate; and the module bottom plate and the at least some cells form the battery module.

According to some embodiments of the present disclosure, there are at least two battery modules in each accommodating region along a second direction different from the first direction.

According to some embodiments of the present disclosure, the power battery pack includes a plurality of layers of battery modules along a third direction.

According to some embodiments of the present disclosure, the cell is a prismatic cell having a cuboid structure and has a length, a thickness, and a height between the length and the thickness. Each cell is placed laterally and vertically. Each cell has a length direction being the first direction, a thickness direction being the second direction, and a height direction being the third direction. Two adjacent cells in each accommodating region are arranged with wide surfaces thereof facing each other.

According to some embodiments of the present disclosure, a ratio of the length L to the thickness D of the cell meets 50≤L/D≤70.

According to some embodiments of the present disclosure, a ratio of a surface area S to a volume V of the cell meets 0.15≤S/V≤0.2.

According to some embodiments of the present disclosure, a ratio of the surface area S to energy E of the cell meets 250≤S/E≤400.

According to some embodiments of the present disclosure, in each accommodating region, the first side edge is provided with a first supporting step, and the second side edge is provided with a second supporting step; and the first end of each cell is supported on the corresponding first supporting step, and the second end of each cell is supported on the corresponding second supporting step.

According to some embodiments of the present disclosure, the first side edge is provided with a first fixing portion, and the second side edge is provided with a second fixing portion; and the first end of each cell is fixed to the first fixing portion, and the second end of each cell is fixed to the second fixing portion.

According to some embodiments of the present disclosure, the cell is a prismatic cell with a metal housing.

According to some embodiments of the present disclosure, a thermal insulating layer is disposed between the module bottom plate and the cell.

According to some embodiments of the present disclosure, a heat conducting plate is disposed between the module top plate and the cell.

According to some embodiments of the present disclosure, the module top plate is a liquid cooling plate or a direct cooling plate in which a cooling structure is disposed.

According to some embodiments of the present disclosure, a first electrode of the cell is led out from the first end of the cell facing the first side edge and a second electrode of the cell is led out from the second end of the cell facing the second side edge.

According to some embodiments of the present disclosure, an explosion-proof valve is disposed on the first end of the cell facing the first side edge, an exhaust channel is provided inside the first side edge, an air inlet is provided on the first side edge at a position corresponding to the explosion-proof valve of each cell, the air inlet is in communication with the exhaust channel, and the accommodating device is provided with an exhaust hole in communication with the exhaust channel; or an explosion-proof valve is disposed on the second end of the cell facing the second side edge, an exhaust channel is provided inside the second side edge, an air inlet is provided on the second side edge at a position corresponding to the explosion-proof valve of each cell, the air inlet is in communication with the exhaust channel, and the accommodating device is provided with an exhaust hole in communication with the exhaust channel; or an explosion-proof valve is disposed on each of the first end and the second end of the cell that face the first side edge and the second side edge respectively, an exhaust channel is provided inside each of the first side edge and the second side edge, an air inlet is provided on the first side edge at a position corresponding to the explosion-proof valve of each cell, an air inlet is also provided on the second side edge at a position corresponding to the explosion-proof valve of each cell, the air inlets are in communication with the corresponding exhaust channels, and the accommodating device is provided with exhaust holes in communication with the exhaust channels.

According to some embodiments of the present disclosure, the first direction is a width direction of a vehicle body, and the second direction is a length direction of the vehicle body; or the first direction is a length direction of a vehicle body, and the second direction is a width direction of the vehicle body.

By using the foregoing technical solutions, in the present disclosure, a first end and a second end of a cell fit a first side edge and a second side edge, that is, the cell extends between the first side edge and the second side edge disposed opposite to each other in an accommodating device, thereby using fewer transverse beams and/or longitudinal beams in the accommodating device in the related art, and even using no transverse beam and/or longitudinal beam in the accommodating device. Therefore, a space occupied by the transverse beam and/or the longitudinal beam in the accommodating device is reduced, a space utilization of the accommodating device is improved, and more cells can be arranged in the accommodating device, thereby improving the capacity, voltage, and endurance capacity of an entire power battery pack. For example, in an electric vehicle, the design may increase the space utilization from the original space utilization of about 40% to more than 60% or even higher, for example, 80%.

In addition, because there is no need to arrange the transverse beam or the longitudinal beam in the accommodating device, on one hand, a manufacturing process of the accommodating device is simplified, the assembly complexity of the cell is reduced, and production costs are reduced; on the other hand, the weight of the accommodating device and the entire power battery pack is reduced, making the power battery pack light-weighted. In particular, when the power battery pack is mounted on the electric vehicle, the endurance capacity of the electric vehicle may be further improved, and the electric vehicle is light-weighted.

Moreover, compared with a cell in the related art, the cell provided in the present disclosure extends between the first side edge and the second side edge, so that the cell may be used as a transverse beam and/or a longitudinal beam reinforcing the structural strength of the accommodating device. In other words, there is no need to further dispose a reinforcing structure in the accommodating device to reinforce the structural strength of the accommodating device, and as a substitution of the reinforcing structure, the cell may be directly used to ensure the structural strength of the accommodating device, thereby ensuring that the accommodating device is not easily deformed under the action of an external force. In addition, in a case of a constant volume, because the cell in the related art has a relatively small size and a relatively short length, two opposite ends of the cell cannot fit two side edges disposed opposite to each other in the accommodating device. However, the cell in the present disclosure has a relatively long length along a first direction, the thickness of the cell along a second direction different from the first direction may be relatively small, so that a surface area of a single cell is greater than a surface area of the cell in the related art. Therefore, a heat dissipation area of the cell may be increased, and a heat dissipation rate of the cell is increased, thereby improving the security of the entire power battery pack, and making the power battery pack safer and more reliable.

In addition, in the present disclosure, the accommodating device further includes a plurality of accommodating regions, and a distance between the first side edge and the second side edge along the first direction varies with each accommodating region, that is, the accommodating device has a plurality of accommodating regions with different shapes and sizes. When the power battery pack is mounted on the electric vehicle, the structure and the shape of the accommodating device may fit a structure and a shape of a mounting space of the power battery pack on the electric vehicle. For example, when the power battery pack is mounted on a chassis of a vehicle body, the shape of the accommodating device may fit a shape of the chassis of the vehicle body, so that as many as cells are arranged, thereby improving the endurance capacity of the electric vehicle.

According to another aspect of the present disclosure, an electric vehicle is provided, and the electric vehicle includes the foregoing power battery pack.

According to some embodiments of the present disclosure, the power battery pack is disposed at the bottom of the electric vehicle, and the accommodating device is fixed to a chassis of the electric vehicle.

According to some embodiments of the present disclosure, the electric vehicle includes a power battery pack disposed at the bottom of the electric vehicle, the accommodating device is fixed to the chassis of the electric vehicle, the plurality of cells are arranged along the second direction different from the first direction, the first direction is a width direction of a vehicle body of the electric vehicle, and the second direction is a length direction of the vehicle body of the electric vehicle.

According to some embodiments of the present disclosure, the plurality of accommodating regions include a center region and two side regions located at two opposite sides of the center region, and a distance between the first side edge and the second side edge in the center region is greater than a distance between the first side edge and the second side edge in the two side regions, so that the plurality of accommodating regions form a cross-shaped structure, and outer sides of the two side regions along the second direction correspond to wheel regions of the electric vehicle.

According to some embodiments of the present disclosure, a ratio of a width L3 of the center region along the first direction to a vehicle body width W meets 50%≤L3/W≤80%.

According to some embodiments of the present disclosure, a ratio of a length L4 of the cell in the center region along the first direction to the vehicle body width W meets 40%≤L4/W≤70%.

According to still another aspect of the present disclosure, an energy storage device is provided, and the energy storage device includes the foregoing power battery pack.

Other features and advantages of the present disclosure will be described in detail in the following detailed description part.

### BRIEF DESCRIPTION OF THE DRAWINGS

The accompanying drawings are intended to provide understanding of the present disclosure and constitute a part of this specification. The accompanying drawings and the specific implementations below are used together for explaining the present disclosure rather than constituting a limitation to the present disclosure. In the accompanying drawings:
FIG. 1 is a schematic exploded view of a power battery pack provided in the related art;
FIG. 2 is a schematic three-dimensional structure diagram of a cell according to an implementation of the present disclosure;
FIG. 3 is a schematic three-dimensional structure diagram of a power battery pack according to an implementation of the present disclosure;
FIG. 4 is a top view of a power battery pack according to an implementation of the present disclosure;
FIG. 5 is an exploded view of a power battery pack according to an implementation of the present disclosure;
FIG. 6 is a schematic three-dimensional structure diagram of an accommodating device according to an implementation of the present disclosure;
FIG. 7 is a schematic three-dimensional structure diagram of an accommodating device according to another implementation of the present disclosure;
FIG. 8 is an enlarged view of a portion A in FIG. 7;
FIG. 9 is a schematic three-dimensional structure diagram of a battery module according to an implementation of the present disclosure;
FIG. 10 is a schematic three-dimensional structure diagram of a power battery pack according to another implementation of the present disclosure, where there are a plurality of battery modules in each accommodating region;
FIG. 11 is a schematic three-dimensional structure diagram of a power battery pack according to still another implementation of the present disclosure, where there are a plurality of layers of battery modules in each accommodating region;
FIG. 12 is a cross-sectional three-dimensional view of a power battery pack according to an implementation of the present disclosure;
FIG. 13 is an enlarged view of a portion B in FIG. 12;
FIG. 14 is an exploded view of a battery module according to an implementation of the present disclosure;
FIG. 15 is a schematic three-dimensional structure diagram of a first side plate or a second side plate according to an implementation of the present disclosure;
FIG. 16 is a schematic three-dimensional structure diagram of a first end plate or a second end plate according to an implementation of the present disclosure;
FIG. 17 is a cross-sectional view of a power battery pack according to an implementation of the present disclosure, where a first side edge and a second side edge are not shown;
FIG. 18 is a schematic three-dimensional structure diagram of an accommodating device (including a chamber) being formed on an electric vehicle according to an implementation of the present disclosure;
FIG. 19 is a cross-sectional view of a chamber according to an implementation of the present disclosure;
FIG. 20 is an exploded view of an accommodating device (a vehicle tray) being fixed to an electric vehicle according to an implementation of the present disclosure;
FIG. 21 is a schematic structural diagram of an electric vehicle according to the present disclosure; and
FIG. 22 is a schematic structural diagram of an energy storage device according to the present disclosure.

**DESCRIPTION OF REFERENCE NUMERALS**

| | | | |
|---|---|---|---|
| 100 | Cell | 101 | First electrode |
| 102 | Second electrode | 103 | Explosion-proof valve |
| 200 | Accommodating device | 201 | First side edge |
| 202 | Second side edge | 203 | Third side edge |
| 204 | Fourth side edge | 205 | First end plate |
| 206 | Second end plate | 207 | First side plate |
| 208 | Second side plate | 209 | Module bottom plate |
| 210 | Module top plate | 211 | First supporting step |
| 212 | Second supporting step | 213 | First fixing portion |
| 214 | Second fixing portion | 215 | Thermal insulating layer |
| 216 | Heat conducting plate | 217 | Liquid cooling plate |
| 218 | Direct cooling plate | 219 | Air inlet |
| 220 | Exhaust channel | 221 | Center region |
| 222 | Two side regions | | |
| 300 | Chamber | 301 | First side wall |
| 302 | Second side wall | 303 | Bottom portion of the chamber |
| 400 | Battery module | 500 | Transverse beam |
| 600 | Longitudinal beam | 700 | Power battery pack |
| 800 | Electric vehicle | 900 | Energy storage device |
| A1 | First direction | A2 | Second direction |
| A3 | Third direction | | |
| L | Length of the cell | D | Thickness of the cell |
| H | Height of the cell | | |

L1 Distance between the first end and the second end of the cell/Length of the cell along the first direction
L2 Distance between an inner surface of the first side edge and an inner surface of the second side edge/Distance between the first side wall and the second side wall along the first direction
L3 Width of the accommodating device along the first direction
L4 Length of the cell along the first direction

### DETAILED DESCRIPTION

Specific implementations of the present disclosure are described in detail below with reference to the accompanying drawings. It should be understood that the specific implementations described herein are merely used to describe and explain the present disclosure, but are not intended to limit the present disclosure.

In the present disclosure, orientation terms used for describing an electric vehicle such as "front, rear, left, and right" usually refer to the front, rear, left, and right of the vehicle. According to some embodiments of the present disclosure, a direction toward the left-side wheel is left, a direction toward the right-side wheel is right, a direction toward the head of the vehicle is front, and a direction toward the tail of the vehicle is rear.

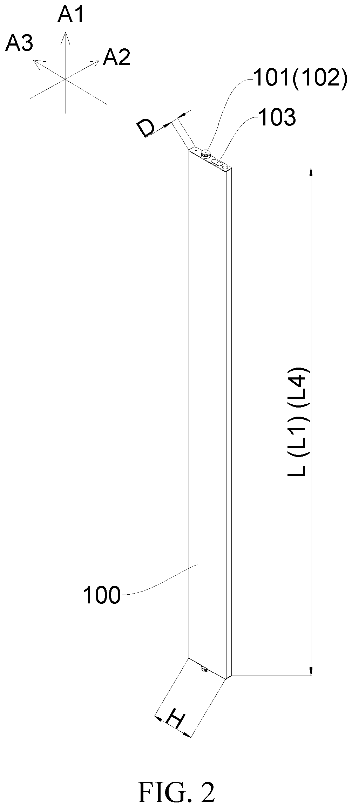

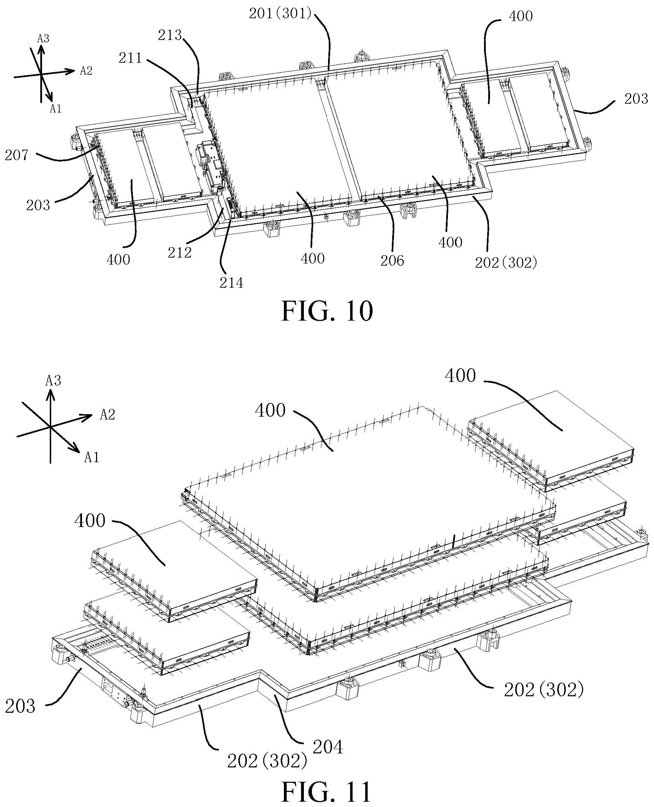

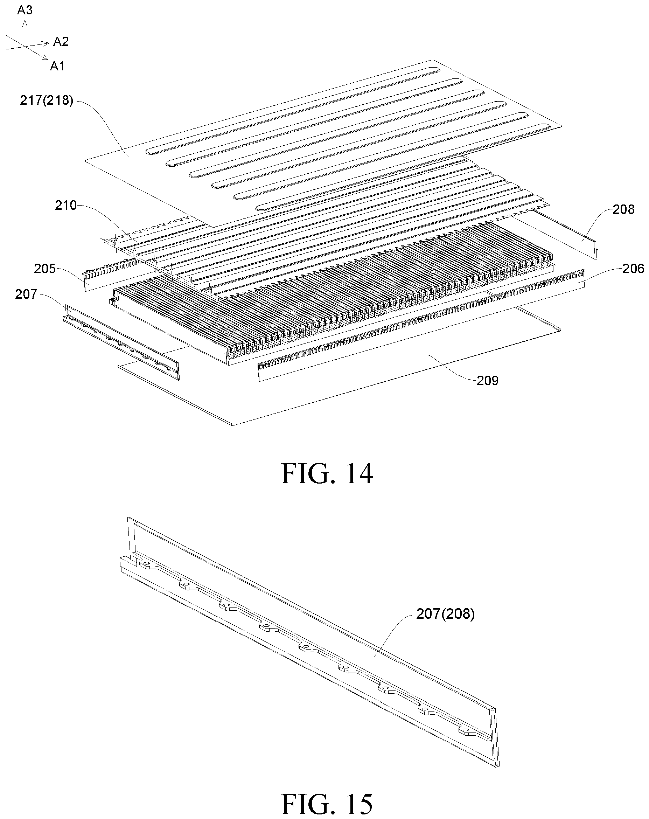

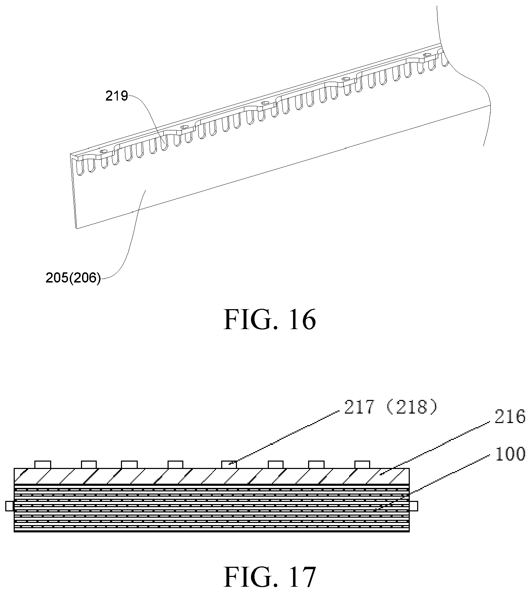

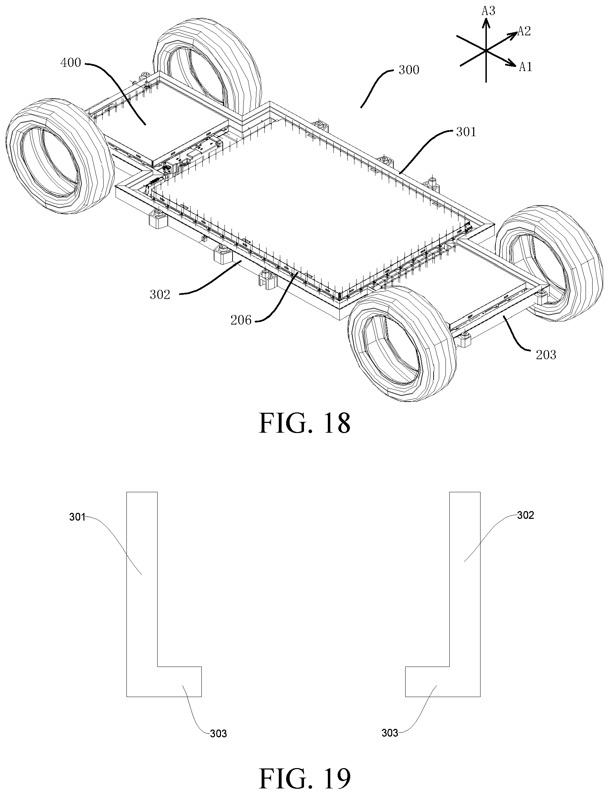

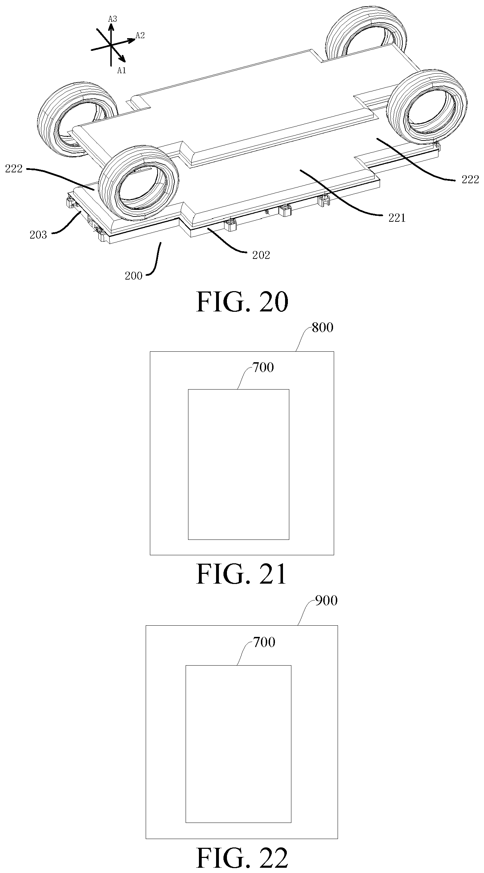

As shown in FIG. 2 to FIG 20, according to an aspect of the present disclosure, a power battery pack 700 is provided, including: an accommodating device 200 and a plurality of cells 100 disposed in the accommodating device 200, where the accommodating device 200 includes a plurality of accommodating regions, each accommodating region has a first side edge 201 and a second side edge 202 disposed opposite to each other along a first direction A1 and cells 100 disposed between the first side edge 201 and the second side edge 202, a distance between the first side edge 201 and the second side edge 202 along the first direction A1 varies with different accommodating regions, to form accommodating regions with different shapes and sizes, each cell 100 includes a first end and a second end opposite to each other, and a distance between the first end and the second end of at least one cell 100 matches a distance between a corresponding first side edge 201 and a corresponding second side edge 202.

In other words, each cell 100 extends between the first side edge 201 and the second side edge 202. A plurality of cells 100 are arranged along a length direction of the first side edge 201 and the second side edge 202, that is, along a second direction A2. According to some embodiments of the present disclosure, there may be one or more accommodating devices 200. Herein, the matching described above means that a distance between two side edges or two side walls described below can match in mounting of one cell 100. The matching may be various matching manners such as a clearance matching, an interference matching, a tight matching, and a stationary matching, to achieve the objectives of the present disclosure.

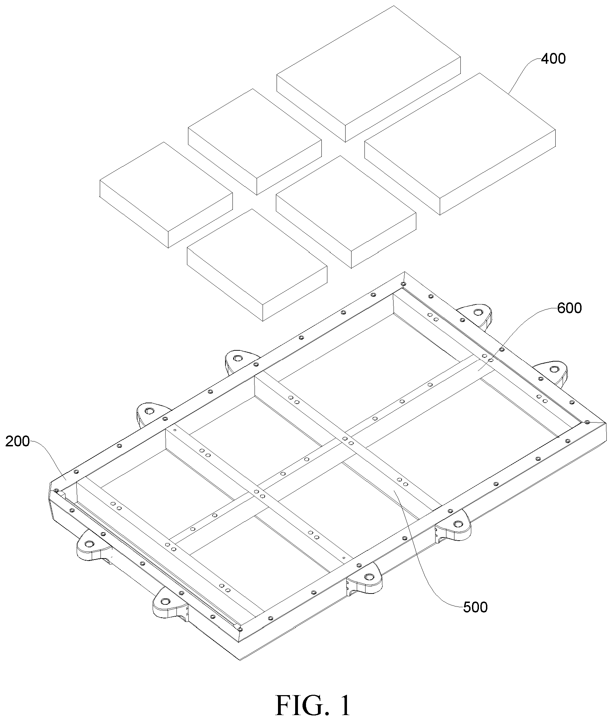

In the related art, because a cell has a relatively small size and a relatively short length, two opposite ends of the cell cannot fit two side beams disposed opposite to each other in the accommodating device 200. Therefore, a transverse beam 500 or a longitudinal beam 600 (as shown in FIG. 1) needs to be disposed in the accommodating device 200, to facilitate assembly of the cell. After the cells are mounted in the accommodating device 200 by using a battery module 400, there are a plurality of cells along a first direction A1 of the accommodating device 200. In other words, the cell does not extend between two side edges disposed opposite to each, but extends between two transverse beams 500 disposed opposite to each other or along a longitudinal beam 600. The battery module 400 is fixed to the adjacent transverse beams 500 by using fasteners, or the battery module 400 is fixed to the adjacent longitudinal beam 600 by using a fastener, or the battery module 400 is fixed to the adjacent transverse beams 500 and longitudinal beam 600 by using fasteners.

Because the transverse beam 500 or the longitudinal beam 600 is disposed in the accommodating device 200 in the related art, the transverse beam 500 or the longitudinal beam 600 occupies a large mounting space used for accommodating cells in the accommodating device 200, resulting in a low volume utilization of the accommodating device 200. Generally, the volume utilization of the accommodating device 200 is about 40% or even lower. In other words, in the related art, only about 40% of the space in the accommodating device 200 may be used to mount cells, resulting in a limited quantity of cells accommodated in the accommodating device 200, limiting a capacity and voltage of the entire power battery pack 700, and causing a poor endurance capacity of the power battery pack 700.

However, in the present disclosure, the first end and the second end of the cell 100 fit the first side edge 201 and the second side edge 202, that is, the cell 100 extends between the first side edge 201 and the second side edge 202 disposed opposite to each other in the accommodating device 200, thereby using fewer transverse beams 500 or longitudinal beams 600 in the accommodating device 200 in the related art, and even using no transverse beam 500 or longitudinal beam 600 in the accommodating device 200. Therefore, a space occupied by the transverse beam 500 or the longitudinal beam 600 in the accommodating device 200 is reduced, a space utilization of the accommodating device 200 is improved, and more cells 100 can be arranged in the accommodating device 200, thereby improving the capacity, voltage, and endurance capacity of the entire power battery pack 700. For example, in an electric vehicle 800, the design may increase the space utilization from the original space utilization of about 40% to more than 60% or even higher, for example, 80%.

In addition, because there is no need to arrange the transverse beam 500 or the longitudinal beam 600 in the accommodating device 200, on one hand, a manufacturing process of the accommodating device 200 is simplified, the assembly complexity of the cell 100 is reduced, and production costs are reduced; on the other hand, the weight of the accommodating device 200 and the entire power battery pack 700 is reduced, making the power battery pack 700 light-weighted. In particular, when the power battery pack 700 is mounted on the electric vehicle 800, the endurance capacity of the electric vehicle 800 may be further improved, and the electric vehicle 800 is light-weighted.

Moreover, compared with a cell in the related art, the cell 100 provided in the present disclosure extends between the first side edge 201 and the second side edge 202, so that the cell 100 may be used as a transverse beam and/or a longitudinal beam reinforcing the structural strength of the accommodating device 200. In other words, there is no need to further dispose a reinforcing structure in the accommodating device to reinforce the structural strength of the accommodating device, and as a substitution of the reinforcing structure, the cell 100 may be directly used to ensure the structural strength of the accommodating device 200, thereby ensuring that the accommodating device 200 is not easily deformed under the action of an external force. In addition, in a case of a constant volume, because the cell in the related art has a relatively small size and a relatively short length, two opposite ends of the cell 100 cannot fit two side edges disposed opposite to each other in the accommodating device 200. However, the cell 100 in the present disclosure has a relatively long length along the first direction A1, the thickness of the cell along the second direction A2 different from the first direction A1 may be relatively small, so that a surface area of a single cell 100 is greater than a surface area of the cell in the related art. Therefore, a heat dissipation area of the cell 100 may be increased, and a heat dissipation rate of the cell 100 is increased, thereby improving the security of the entire power battery pack 700, and making the power battery pack 700 safer and more reliable.

In addition, in the present disclosure, the accommodating device 200 further includes a plurality of accommodating regions, and a distance between the first side edge 201 and the second side edge 202 along the first direction A1 varies with each accommodating region, that is, the accommodating device 200 has a plurality of accommodating regions with different shapes and sizes. When the power battery pack 700 is mounted on the electric vehicle 800, the structure and the shape of the accommodating device 200 may fit a structure and a shape of a mounting space of the power battery pack 700 on the electric vehicle 800. For example, when the power battery pack 700 is mounted on a chassis of a vehicle body, the shape of the accommodating device 200 may fit a shape of the chassis of the vehicle body, so that as many as cells 100 are arranged, thereby improving the endurance capacity of the electric vehicle 800.

In some implementations of the present disclosure, a first end of at least one cell 100 is supported on a corresponding first side edge 201, and a second end of the cell 100 is supported on a corresponding second side edge 202. The first end and the second end of the cell 100 may be respectively placed on the first side edge 201 and the second side edge 202, or may be fixed to the first side edge 201 and the second side edge 202 in a specific fixing manner described in detail below. A specific support manner and fixing manner are not limited in the present disclosure.

The support may be direct support or indirect support. The direct support means that the first end of the cell 100 is in direct contact with, fits, and is supported by the first side edge 201, and the second end of the cell 100 is in direct contact with and fits the second side edge 202; and the indirect support means that, for example, in some embodiments, the first end of the cell 100 fits and is supported on the first side edge 201 through a first end plate 205, and the second end of the cell 100 fits and is supported on the second side edge 202 through a second end plate 206.

In some exemplary implementations provided in the present disclosure, the first end of each cell 100 is fixed to the corresponding first side edge 201, and the second end of each cell 100 is fixed to the corresponding second side edge 202. On one hand, the cell 100 may be supported along a third direction A3 in the fixed connection manner. On the other hand, the stability and firmness of the entire structure may be improved in the fixed connection manner. There are a plurality of fixing manners herein. For example, the first end of each cell 100 is detachably fixed to the first side edge 201 through a fastener, and the second end is detachably fixed to the second side edge 202 through a fastener; or the first end and the second end of each cell 100 are respectively fixed to the first side edge 201 and the second side edge 202 through welding; or the first end and the second end of each cell 100 are respectively fixed to the first side edge 201 and the second side edge 202 through adhesive dispensing.

It should be noted that the first side edge 201 and the second side edge 202 described above and below are disposed opposite to each other, which means that the first side edge 201 may be parallel to each other, or may be disposed at an angle, and may be a straight line structure or a curved structure. The cell 100 may be perpendicular to the first side edge 201, or the cell 100 is perpendicular to the second side edge 202, or the cell 100 is disposed at an acute angle or an obtuse angle with the first side edge 201, or the cell 100 is disposed at an acute angle or an obtuse angle with the second side edge 202. For example, when the first side edge 201 and the second side edge 202 are parallel to each other, the accommodating device 200 formed by the first side edge 201 and the second side edge 202 may be a rectangle, a square, a parallelogram, a circular sector, or another structure. When the first side edge 201 and the second side edge 202 are at an angle, the accommodating device 200 formed by the first side edge 201 and the second side edge 202 may be a trapezoid, a triangle, or another structure. In the present disclosure, an angular relationship between the first side edge 201 and the second side edge 202, and an angular relationship between the cell 100 and the first side edge 201 as well as the second side edge 202 are not limited.

For an embodiment in which the first side edge 201 and the second side edge 202 are parallel to each other, in different accommodating regions, distances between the first side edges 201 and the second side edges 202 are abruptly changed in sizes. For an embodiment in which the first side edge 201 and the second side edge 202 are at an angle, in different accommodating regions, distances between the first side edges 201 and the second side edges 202 are gradually changed in sizes. In this case, a distance between the first side edge 201 and the second side edge 202 is an average value of the distances between the first side edges 201 and the second side edges 202 in the accommodating regions.

In addition, that the first side edge 201 and the second side edge 202 are located on two opposite sides of the accommodating device 200 along the first direction A1 means that the first side edge 201 and the second side edge 202 are located on sides of the accommodating device 200 along the first direction A1, that is, the first side edge 201 and the second side edge 202 are outermost sides of the accommodating device 200.

In addition, the "first end" and "second end" of the cell 100 mentioned in the foregoing and the following are used for describing an orientation of the cell 100, but are not used for defining and describing a specific structure of the cell 100. For example, the first end and the second end are not used for defining and describing a positive electrode and a negative electrode of the cell 100. In other words, in the present disclosure, one end of the cell 100 matching the first side edge 201 is the first end, and the other end of the cell 100 matching the second side edge 202 is the second end.

The cell 100 may be assembled between the first side edge 201 and the second side edge 202 through various implementations. For example, in some implementations of the present disclosure, the first end of each cell 100 is supported on the corresponding first side edge 201, and the second end of each cell 100 is supported on the corresponding second side edge 202. The first end and the second end of the cell 100 may be respectively placed on the first side edge 201 and the second side edge 202, or may be fixed to the first side edge 201 and the second side edge 202 in a specific fixing manner described in detail below. A specific support manner and fixing manner are not limited in the present disclosure.

The support may be direct support or indirect support. The direct support means that the first end of the cell 100 is in direct contact with, fits, and is supported by the first side edge 201, and the second end of the cell 100 is in direct contact with and fits the second side edge 202; and the indirect support means that, for example, in some embodiments, the first end of the cell 100 fits and is supported on the first side edge 201 through a first end plate 205, and the second end of the cell 100 fits and is supported on the second side edge 202 through a second end plate 206.

In some exemplary implementations provided in the present disclosure, the first end of each cell 100 is fixed to the corresponding first side edge 201, and the second end of each cell 100 is fixed to the corresponding second side edge 202. On one hand, the cell 100 may be supported along a third direction A3 in the fixed connection manner. On the other hand, the stability and firmness of the entire structure may be improved in the fixed connection manner. There are a plurality of fixing manners herein. For example, the first end of each cell 100 is detachably fixed to the first side edge 201 through a fastener, and the second end is detachably fixed to the second side edge 202 through a fastener; or the first end and the second end of each cell 100 are respectively fixed to the first side edge 201 and the second side edge 202 through welding; or the first end and the second end of each cell 100 are respectively fixed to the first side edge 201 and the second side edge 202 through adhesive dispensing.

In addition, the accommodating device 200 formed by the plurality of accommodating regions may have any appropriate structure and shape. For example, in an implementation provided in the present disclosure, the plurality of accommodating regions include a center region 221 and two side regions 222 located at two opposite sides of the center region 221, and a distance between the first side edge 201 and the second side edge 202 in the center region 221 is greater than a distance between the first side edge 201 and the second side edge 202 in the two side regions 222, so that the plurality of accommodating regions form a cross-shaped structure. In this way, when the accommodating device 200 is mounted on the bottom of the electric vehicle 800, one of the two side regions 222 may be located between a front left wheel and a front right wheel, the other of the two side regions 222 may be located between a rear left wheel and a rear right wheel, and the center region 221 may be located between front wheels (including the front left wheel and the front right wheel) and rear wheels (including the rear left wheel and the rear right wheel), so that as many as mounting spaces of the bottom of the electric vehicle 800 are used, an area of the accommodating device 200 is expanded, and more cells 100 can be arranged on the electric vehicle 800, thereby improving an endurance capacity of the electric vehicle 800. Distances between the first side edges 201 and the second side edges 202 in the two side regions 222 located at two sides of the center region 221 may be the same or may be different. This is not limited in the present disclosure.

In another implementation provided in the present disclosure, the plurality of accommodating regions include a first region and a second region located at one side of the first region, and a distance between the first side edge 201 and the second side edge 202 in the first region is greater than a distance between the first side edge 201 and the second side edge 202 in the second region, so that the plurality of accommodating regions form a T-shaped structure. In this way, when the accommodating device 200 is mounted on the bottom of the electric vehicle 800, the second region may extend into a region between the front left wheel and the front right wheel or a region between the rear left wheel and the rear right wheel, to reasonably use a mounting region between the wheels on the bottom of the electric vehicle 800 and improve an area of the accommodating device 200 as much as possible. In another implementation, the plurality of accommodating regions may alternatively form a triangle, a trapezoid, a rhombus, a parallelogram, or the like, and a specific shape formed by the plurality of accommodating regions may be set according to a mounting space of the bottom of the electric vehicle 800.

In addition, to ensure consistency between the cells 100 in different accommodating regions, in an implementation provided in the present disclosure, the cells 100 in the different accommodating regions have the same volume, or the same capacity, or the same volume and capacity. In the power battery pack 700, the cells 100 are generally connected in series, so that the power battery pack 700 has a sufficient voltage to drive the electric vehicle 800 to travel. Because distances between the first side edges 201 and the second side edges 202 in the different accommodating regions are different, distances between the first ends and the second ends of the first cells 100 are also different, that is, shapes and sizes of the cells 100 in the different accommodating regions are different. Generally, a voltage of each cell 100 is the same. To ensure consistency between the cells 100 in the different accommodating regions, that is, to ensure the same amount of power of the cells 100 in the different accommodating regions, it is necessary to ensure that a capacity of each cell is the same (the amount of power is equal to a product of the capacity and the voltage). When each cell 100 adopts the same material, because the capacity is proportional to the voltage of the cell 100, the same volume of each cell 100 is ensured and the same amount of power of each cell may be also achieved. In this way, it can be ensured that the cells 100 in the different accommodating regions can be charged to the same state within the same charging time, thereby avoiding, for example, occurrence of a condition in which one cell 100 is fully charged but another cell 100 is not fully charged.

To ensure the same ratio of the volumes to the capacities of the cells 100 in the different accommodating regions, in an exemplary implementation provided in the present disclosure, the cell 100 is a prismatic cell having a cuboid structure, and has a length L, a thickness D, and a height H between the length L and the thickness D. Each cell 100 is placed laterally and vertically. Each cell 100 has a length direction being a first direction A1, a thickness direction being a second direction A2, and a height direction being a third direction A3. The heights H of the cells 100 in the different accommodating regions are the same, and a ratio between the lengths L of the cells and a ratio between the thicknesses D of the cells are reciprocals of each other, so that the ratios of the volumes to the capacities of the cells 100 in the different accommodating regions are the same. Herein, an embodiment in which the plurality of accommodating regions form a cross shape and distances between the first side edges 201 and the second side edges 202 in the two side regions 222 are equal is used as an example for description, when a length of the cell 100 in the center region 221 is twice a length of the cell 100 in the two side regions 222, a thickness of the cell 100 in the two side regions 222 is twice a thickness of the cell 100 in the center region 221, to ensure that a volume of the cell 100 in the center region 221 is the same as a volume of the cell 100 in the two side regions 222, thereby having the same amount of power and ensuring the consistency between the cell 100 in the center region 221 and the cell 100 in the two side regions 222.

In addition, as shown in FIG. 2, in an implementation provided in the present disclosure, the accommodating device 200 is a vehicle tray, and the vehicle tray is a separately-produced vehicle tray for accommodating and mounting the cell 100. After the cell 100 is mounted in the vehicle tray, the vehicle tray may be mounted on the vehicle body through a fastener, for example, suspended from the chassis of the electric vehicle 800.

In the vehicle tray, the vehicle body has a relatively large width such as 1.2m to 2m, and has a relatively large length such as 2m to 5m. For different vehicles models, widths and lengths of corresponding vehicle bodies are different. Due to the relatively large vehicle body width and length, the tray disposed at the bottom of the vehicle body has a relatively large overall size. Due to the relatively large size of the tray, in the related art, transverse beams 500 further need to be disposed in the tray in addition to side edges disposed on sides of the tray, to provide a sufficient support force and structural strength for internal cells. After the transverse beams 500 are added to the vehicle tray, a weight and an internal space of the entire vehicle tray are occupied. As a result, there is only a small space that can be effectively used inside the tray. In addition, due to the existence of the transverse beams 500, a plurality of battery modules 400 need to be disposed inside the tray in a width direction and a length direction, to coordinate with mounting of the transverse beams 500. The mounting is complex, and many mounting structural members are required.

However, as shown in FIG. 1, if the transverse beams 500 are removed, the module layout manner and the cell layout manner in the related art cannot provide sufficient structural strength for the battery module 400, and the tray cannot provide sufficient weight capacity.

However, in the present disclosure, two ends of the cell 100 are supported on the first side edge 201 and the second side edge 202, or two ends of the cell 100 are fixedly supported on the first side edge 201 and the second side edge 202, and the weight of the cell 100 is distributed to side edges of the tray on two sides. While the transverse beams 500 are removed, the weight capacity of the tray is effectively improved. In addition, the cell 100 can also be used as the overall reinforcing structure of the power battery pack 700, improving the overall structural strength of the power battery pack 700.

In some embodiments, when the power battery pack 700 is used as a power battery pack 700 used in a vehicle for providing electric energy, the first direction A1 of the cell 100 may be used as a width direction of the vehicle, that is, a left-right direction of the vehicle. As an optional implementation, a length of the cell 100 along the first direction A1 may range from 500 mm to 1000 mm, so that the length of the cell 100 can fit the width of the vehicle. For different accommodating regions, a length of the cell 100 in each accommodating region along the first direction A1 ranges from 500 mm to 1000 mm.

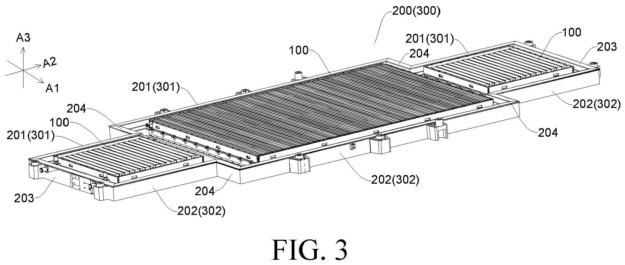

In another implementation provided in the present disclosure, as shown in FIG. 3 to FIG. 9, the accommodating device 200 may be alternatively directly formed on an electric vehicle 800. In other words, the accommodating device 200 is a device which is formed at any appropriate position on the electric vehicle 800 and in which the cell 100 is mounted. For example, the accommodating device 200 may be formed on the chassis of the electric vehicle 800.

As an embodiment, the accommodating device 200 may include a chamber 300 recessed downward, to help assembly of the cell 100. According to some embodiments of the present disclosure, the accommodating device 200 may be integrally formed with the chassis of the electric vehicle 800, and formed as the chamber 300 recessed downward from the chassis.

In a specific implementation provided in the present disclosure, the chamber 300 may include a first side wall 301 and a second side wall 302 disposed opposite to each other. According to some embodiments of the present disclosure, the first side edge 201 may be obtained by extending the chassis of the electric vehicle 800 downward, or the second side edge 202 may be obtained by extending the chassis of the electric vehicle 800 downward. The first side edge 201 is the first side wall 301 of the chamber 300 and an extension portion of the first side wall 301, and the second side edge 202 is the second side wall 302 of the chamber 300 and an extension portion of the second side wall 302. In this way, in some embodiments of the present disclosures, the first end of the cell 100 may be supported on the extension portion of the first side wall 301, and the second end of the cell 100 may be supported on the extension portion of the second side wall 302. That is, the present disclosure further provides an electric vehicle 800 in which the cells 100 can be arranged according to the foregoing technical solution, and a chamber 300 that has the same characteristic as the separate vehicle tray is formed on the electric vehicle 800, thereby forming the battery accommodating device 200 provided in the present disclosure.

According to some embodiments of the present disclosure, bottom portions 303 of the chamber 300 may be formed by the extension portion of the first side wall 301 and the extension portion of the second side wall 302. In an implementation, the extension portion of the first side wall 301 is connected to the extension portion of the second side wall 302, so that the chamber 300 is formed as a chamber 300 having a downward recessed U-shaped groove. The cell 100 may be supported by the bottom portions 303 of the chamber 300. In another implementation, the extension portion of the first side wall 301 may be alternatively spaced apart from the extension portion of the second side wall 302 by a specific distance.

As shown in FIG. 2 to FIG. 7, the cell 100 is described again. In some embodiments, the cell 100 is perpendicular to the first side edge 201 and the second side edge 202, a distance between the first end and the second end of the cell 100 is L1, and a distance between an inner surface of the first side edge 201 and an inner surface of the second side edge 202 is L2. A ratio of L1 to L2 meets L1/L2≥50%. In other words, along the first direction A1, only one cell 100 is arranged between the first side edge 201 and the second side edge 202. The cell 100 and two side edges are arranged in this manner along the first direction A1, so that the cell 100 may be used as a transverse beam 500 or a longitudinal beam 600. In other possible implementations, in a case that such a dimensional ratio is met, under the concept of the present disclosure, two or more cells 100 may be further disposed along the first direction A1, to at least fully utilize a space of the accommodating device 200.

According to some embodiments of the present disclosure, the ratio of L1 to L2 may meet 80%≤L1/L2≤97%, so that the first end and the second end of the cell 100 are as close as possible to the first side edge 201 and the second side edge 202, and even abut against the first side edge 201 and the second side edge 202, to facilitate dispersion and transmission of a force through the structure of the cell 100, ensuring that the cell 100 may be used as a transverse beam 500 or a longitudinal beam 600 for strengthening the structural strength of the accommodating device 200, and ensuring that the accommodating device 200 has sufficient strength to resist deformation caused by an external force.

As shown in FIG. 3, the plurality of cells 100 may be arranged in the accommodating device 200 in various manners. In an implementation provided in the present disclosure, the plurality of cells 100 are arranged along a second direction A2 different from the first direction A1. The plurality of cells 100 may be arranged along the second direction A2 at intervals, or tightly arranged. In this implementation, the plurality of cells are tightly arranged along the second direction A2 perpendicular to the first direction A1, to fully utilize the space.

In a specific implementation provided in the present disclosure, the first direction A1 may be perpendicular to the second direction A2, the first direction A1 is a length direction of each cell 100, and the second direction A2 is a length direction of the first side edge 201 and the second side edge 202, that is, a thickness direction of each cell 100. In other words, the first side edge 201 and the second side edge 202 are perpendicular to the cell 100, and two ends of each cell 100 in the length direction are supported on the first side edge 201 and the second side edge 202. In this way, when the first side edge 201 is impacted by an external force, or when the second side edge 202 is impacted by an external force, or when the first side edge 201 and the second side edge 202 are impacted by external forces simultaneously, a plurality of cells 100 can conduct and disperse the forces, to better reinforce the structure, thereby improving the capability of the accommodating device 200 in resisting deformation caused by the external force. The first side edge 201 and the second side edge 202 are linear structures, and the second direction A2 is a linear direction. In some possible implementations, the first side edge 201 and the second side edge 202 may be curved structures. In this case, the first direction A1 may be alternatively a circumferential direction, and the corresponding second direction A2 is a radial direction.

In some other embodiments, the power battery pack 700 is provided with a plurality of layers of cells 100 along a third direction A3. In other words, the plurality of cells 100 are arranged in a plurality of layers stacked along the third direction A3. A plurality of cells 100 in each layer are located between the first side edge 201 and the second side edge 202. The quantity of layers of the cells 100 may be set according to the size of the accommodating device 200. In this way, as many as cells 100 can be arranged in a limited space of the accommodating device 200, to improve the volume utilization of the accommodating device 200 and improve the capacity, voltage, and endurance capacity of the power battery pack 700. In an implementation, the first direction A1 and the second direction A2 may be perpendicular to each other, and the third direction A3 may be perpendicular to the first direction A1 and the second direction A2. According to some embodiments of the present disclosure, the first direction A1 and the second direction A2 are a front-rear direction and a left-right direction in a horizontal direction, and the third direction A3 is a vertical direction. According some embodiments of the present disclosure, the cells 100 in each layer may or may not be connected to each other. This is not limited in the present disclosure.

In the foregoing embodiment, the cells 100 stacked along the third direction A3 may be cells 100 that have two ends fitting the first side edge 201 and the second side edge 202, or may be placed directly on top of a next layer of cells 100 and do not fit, for support, or be connected to the first side edge 201 and the second side edge 202.

In an implementation, as shown in FIG. 3 to FIG. 8, a first electrode 101 of the cell 100 is led out from the first end of the cell 100 facing the first side edge 201, and a second electrode 102 of the cell 100 is led out from the second end of the cell 100 facing the second side edge 202. In other words, the length direction of the cell 100 may be a current direction inside the cell 100, that is, the current direction inside the cell 100 is the first direction A1. In this way, because the current direction is the same as the length direction of the cell 100, the cell 100 has a larger effective heat dissipation area and better heat dissipation efficiency. Herein, the first electrode 101 may be a positive electrode of the cell 100, and the second electrode 102 is a negative electrode of the cell 100. Alternatively, the first electrode 101 is a negative electrode of the cell 100, and the second electrode 102 is a positive electrode of the cell 100.

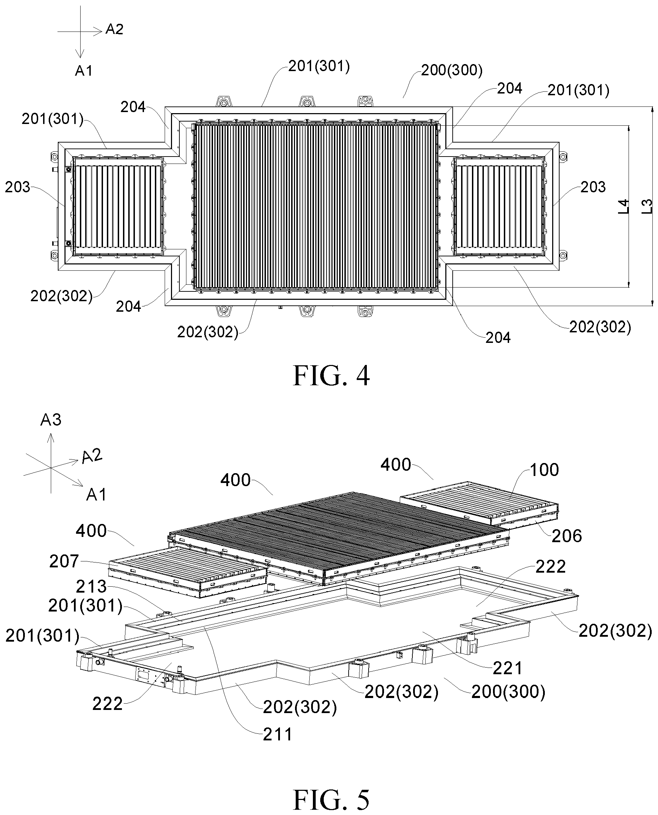

Moreover, the cell 100 may have any appropriate structure and shape. In an implementation provided in the present disclosure, as shown in FIG. 4 to FIG. 8, the cell 100 is a prismatic cell having a cuboid structure and has a length L, a thickness D, and a height H between the length L and the thickness D. Each cell 100 is placed laterally and vertically. Each cell 100 has a length direction being the first direction A1, a thickness direction being the second direction A2, and a height direction being the third direction A3. Two adjacent cells 100 are arranged with wide surfaces thereof facing each other. In other words, the cuboid has a length L in the length direction, a thickness D in a thickness direction perpendicular to the length direction, and a height H in a height direction. The height H is between the length L and the thickness D. According to some embodiments of the present disclosure, the cell 100 has a wide surface, a narrow surface, and an end surface. A long side of the wide surface has the foregoing length L, and a short side thereof has the foregoing height H. A long side of the narrow surface has the foregoing length L, and a short side thereof has the foregoing thickness D. A long side of the end surface has the foregoing height H, and a short side thereof has the foregoing thickness D. That the cell 100 is placed laterally and vertically means that two end surfaces of the cell 100 face toward the first side edge 201 and the second side edge 202 respectively, and wide surfaces of two adjacent cells 100 face toward each other, so that the cell 100 may replace a transverse beam 500 and achieve a better effect and higher strength. In another implementation, the cell 100 may be alternatively a cylindrical cell.

In the related art, how to design the shape and size of the cell so that the cell has both an appropriate battery capacity and a good heat dissipation effect has always been a problem to be resolved in the field of battery technologies.

In an implementation provided in the present disclosure, a ratio of the length L to the thickness D of the cell 100 meets 50≤L/D≤70. With this ratio, a longer and thinner cell 100 may be obtained. In this way, while the length of the cell 100 extends in the first direction A1, an appropriate resistance value, a relatively high heat dissipation area, and good heat dissipation efficiency may be maintained, so that the cell is well adapted to various vehicle models.

In another implementation provided in the present disclosure, a ratio of a surface area S of the cell 100 to a volume V thereof meets 0.15≤S/V≤0.2. The ratio may be achieved through the foregoing longer and thinner cell 100 or through size adjustment. By controlling the ratio of the surface area S of the cell 100 to the volume V thereof, it may be ensured that while the length of the cell 100 extends along the first direction A1, the cell has a sufficient heat dissipation area, to ensure the heat dissipation effect of the cell 100.

In still another implementation provided in the present disclosure, a ratio of the surface area S of the cell 100 to energy E thereof meets 250≤S/E<400. With this ratio, a longer and thinner cell 100 may be still obtained. Similarly, the ratio may be achieved through the foregoing longer and thinner cell 100 or may be achieved through other dimension adjustments. By controlling the ratio of the surface area S of the cell 100 to the energy E thereof, it may be ensured that while the cell 100 has specific energy E, the surface area S of the cell can meet heat dissipation requirements.

In some embodiments, the cell 100 may be a prismatic cell with a metal housing. In other words, the housing of the cell 100 is made of a metal material, and the metal has better heat conducting performance, thereby further improving the heat dissipation efficiency of the cell 100 and optimizing the heat dissipation effect. In another implementation provided in the present disclosure, the cell 100 may be a pouch battery. The pouch battery refers to a liquid lithium-ion battery sheathed with a layer of a polymer housing and wrapped with an aluminum plastic film structurally. When a safety hazard occurs, the pouch battery swells without explosion, thereby improving the safety performance of the cell 100.

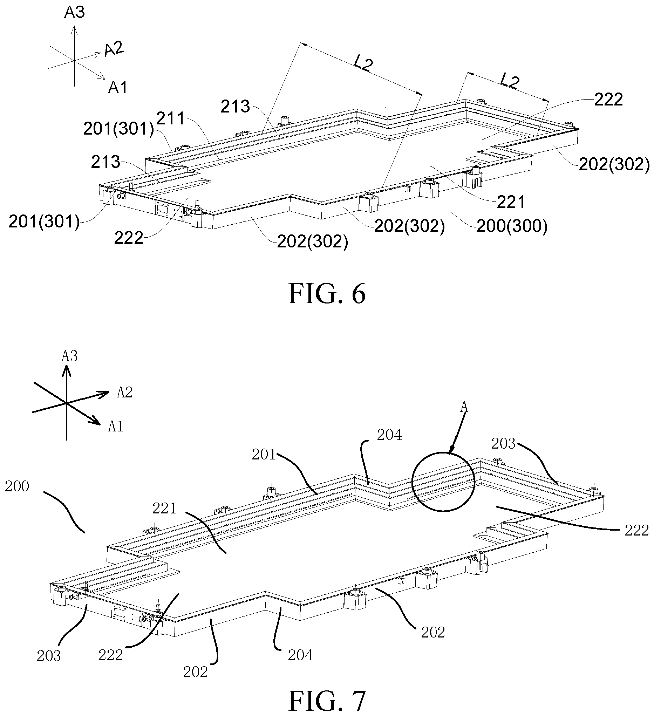

As shown in FIG. 6 and FIG 7, a specific structure of the accommodating device 200 is described again, and an embodiment in which the plurality of accommodating regions form a cross shape is used as an example. In an implementation provided in the present disclosure, the accommodating device 200 further includes third side edges 203 and fourth side edges 204 disposed along a second direction A2 different from the first direction A1, one end of the first side edge 201 far away from the center region 221 and one end of the second side edge 202 far away from the center region 221 of the two side regions 222 are connected by the third side edge 203, and one end of the first side edge 201 close to the center region 221 and one end of the second side edge 202 close to the center region 221 of the two side regions 222 are respectively connected to the first side edge 201 and the second side edge 202 of the center region 221 by the fourth side edge 204, the cells 100 in the two side regions 222 are arranged between the third side edge 203 and the fourth side edge 204 along the second direction A2, and the cell 100 in the center region 221 is arranged between the fourth side edges 204 along the second direction A2. According to some embodiments of the present disclosure, the first side edge 201 and the second side edge 202 are perpendicular to and connected to the third side edge 203 and the fourth side edge 204.

It should be noted that, regardless of whether the accommodating device 200 is the separately-produced vehicle tray for accommodating and mounting the cell 100 or the chamber 300 integrally formed with the chassis of the electric vehicle 800, the shape and structure thereof substantially remain the same. A size relationship between the vehicle tray and the cell 100 is also applicable to the chamber 300 and the cell 100.

In some embodiments, as shown in FIG. 3 to FIG. 12, the third side edge 203 may apply a force, which points toward the two side regions 222, to the cell 100 disposed adjacent to the third side edge 203, and the fourth side edge may apply a force, which points toward the center region 221, to the cell 100 disposed adjacent to the fourth side edge 204. Therefore, the plurality of cells 100 can be tightly arranged along the second direction A2, and the plurality of cells 100 can fit each other. In addition, the third side edge 203 and the fourth side edge 204 may limit the plurality of cells 100 in the second direction A2. In particular, when the cells 100 slightly swell, the cells 100 can be buffered and provided with an inward pressure to prevent the cells 100 from swelling and deforming excessively. In particular, when the cell 100 is provided with an explosion-proof valve 103 and a current interruption device (CID), the third side edge 203 and the fourth side edge 204 can effectively limit the swelling of the cell 100, so that when the cell 100 has a fault and swells, sufficient air pressure is generated inside the cell to break through the explosion-proof valve 103 or a flip sheet in the CID, thereby short-circuiting the cell 100, ensuring safety of the cell 100, and preventing the cell 100 from exploding.

In some implementations, an explosion-proof valve 103 is disposed on the first end of the cell 100 facing the first side edge 201, an exhaust channel 220 is provided inside the first side edge 201, an air inlet 219 is provided on the first side edge 201 at a position corresponding to the explosion-proof valve 103 of each cell 100, the air inlet 219 is in communication with the exhaust channel 220, and the accommodating device 200 is provided with an exhaust hole in communication with the exhaust channel 220; or an explosion-proof valve 103 is disposed on the second end of the cell 100 facing the second side edge 202, an exhaust channel 220 is provided inside the second side edge 202, an air inlet 219 is provided on the second side edge 202 at a position corresponding to the explosion-proof valve 103 of each cell 100, the air inlet 219 is in communication with the exhaust channel 220, and the accommodating device 200 is provided with an exhaust hole in communication with the exhaust channel 220; or an explosion-proof valve 103 is disposed on each of the first end of and the second end of the cell 100 that face the first side edge 201 and the second side edge 202 respectively, an exhaust channel 220 is provided inside each of the first side edge 201 and the second side edge 202, an air inlet 219 is provided on the first side edge 201 at a position corresponding to the explosion-proof valve 103 of each cell 100, an air inlet 219 is provided on the second side edge 202 at a position corresponding to the explosion-proof valve 103 of each cell 100, the air inlets 219 are in communication with the corresponding exhaust channels 220, and the accommodating device 200 is provided with exhaust holes in communication with the exhaust channels 220.

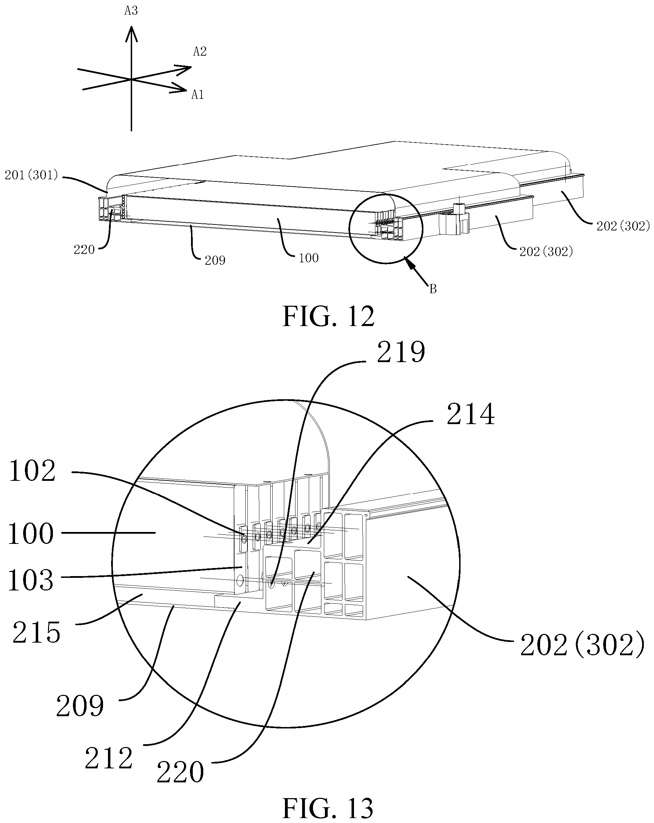

In another implementation, as shown in FIG. 12, the air inlets 219 may be alternatively formed on the first side edge 201 and a first end plate 205 mentioned below, or the air inlets 219 are formed on the second side edge 202 and a second end plate 206 mentioned below, or the first side edge 201, the second side edge 202, a first end plate 205 mentioned below, and a second end plate 206 mentioned below are all provided with the air inlets 219.

In the related art, during use of the cell, if the air pressure inside the cell increases to a specific degree, the explosion-proof valve is opened. Flame, smoke, or gas inside the cell is exhausted through the explosion-proof valve. The flame, smoke, or gas gathers inside the power battery pack 700 and causes secondary damage to the cell if not exhausted in time. However, in the present disclosure, because the air inlet 219 corresponding to the explosion-proof valve 103 of each cell 100 is provided on the first side edge 201 or the second side edge 202, and the exhaust channel 220 is provided inside the first side edge 201 or the second side edge 202, when the air pressure inside the cell 100 increases, the explosion-proof valve 103 of the cell is opened. Flame, smoke, or gas inside the cell directly enters the exhaust channel 220 in the first side edge 201 or enters the exhaust channel 220 in the second side edge 202 through the air inlet 219, and is exhausted out of the first side edge 201 or the second side edge 202 through the exhaust hole, for example, into the atmosphere through the exhaust hole. In this way, the flame, smoke, or gas does not gather inside the accommodating device 200, to prevent the flame, smoke or gas from causing secondary damage to the cell 100.

In addition, according to some embodiments of the present disclosure, the plurality of cells 100 may be alternatively first assembled into at least one battery module 400, and then the battery module is mounted in the accommodating device 200. In this way, based on the technical concept of the present disclosure, the technical effect of the present disclosure can also be implemented through a fitting relationship between an external structure of the battery module 400 and the first side edge 201 and the second side edge 202.

For example, in a first implementation, in each accommodating region, a first end plate 205 is disposed between first ends of at least some cells 100 of the plurality of cells 100 and the first side edge 201. A second end plate 206 is disposed between second ends of the at least some cells 100 of the plurality of cells 100 and the second side edge 202. The first ends of the at least some cells 100 are supported on the first side edge 201 through the first end plate 205, and the second ends of the at least some cells 100 are supported on the second side edge 202 through the second end plate 206. The first end plate 205, the second end plate 206, and the at least some cells 100 form a battery module 400.

According to some embodiments of the present disclosure, in each accommodating region, there may be one first end plate 205 and one second end plate 206. The first end plate 205, the second end plate 206, and the plurality of cells 100 form one battery module 400. The first end and the second end of the cell 100 may be respectively supported on the first side edge 201 and the second side edge 202 or fixed to the first side edge 201 and the second side edge 202 through the first end plate 205 and the second end plate 206. There may be a plurality of first end plates 205 and a plurality of second end plates 206. The first end plates 205, the second end plates 206, and the plurality of cells 100 form a plurality of battery modules 400. Each battery module 400 is supported on the first side edge 201 and the second side edge 202 through the corresponding first end plate 205 and the corresponding second end plate 206. In other words, as an implementation, there may be at least two battery modules 400 in each accommodating region along the second direction A2 different from the first direction A1. The quantity of the first end plates 205 and the quantity of the second end plates 206, that is, the quantity of the battery modules 400, are not limited in the present disclosure.

In a second implementation, in each accommodating region, a module bottom plate 209 may be further disposed below the at least some cells 100 of the plurality of cells 100, the module bottom plate 209 is connected between the first end plate 205 and the second end plate 206, and the module bottom plate 209, the first end plate 205, the second end plate 206, and the at least some cells 100 form the battery module 400. In other words, the module bottom plate 209 is disposed below the at least some of the plurality of cells 100, to support the cells 100. The module bottom plate 209 is connected to the first end plate 205, and the module bottom plate 209 is connected to the second end plate 206. The module bottom plate 209, the first end plate 205, the second end plate 206, and the at least some of the plurality of cells 100 form the battery module 400. There may be one or more module bottom plates 209. For an embodiment in which a plurality of battery modules 400 are disposed in each accommodating region, the module bottom plates 209 of two adjacent battery modules 400 may be connected to each other or integrally formed as one module bottom plate 209. Alternatively, the module bottom plates 209 in the plurality of accommodating regions are integrally formed as one module bottom plate 209. For example, for an embodiment in which the plurality of accommodating regions form a cross-shaped structure, the module bottom plates 209 may be in a cross shape.

In a third implementation, a module top plate 210 may be further disposed above at least some cells 100 of the plurality of cells 100, the module top plate 210 is connected between the first end plate 205 and the second end plate 206, and the module top plate 210, the module bottom plate 209, the first end plate 205, the second end plate 206, and the at least some cells 100 form the battery module 400. In this way, the cell 100 is located between the module top plate 210 and the module bottom plate 209. The module top plate 210 and the module bottom plate 209 may prevent the cell 100 from moving up and down, increasing the stability of the cell 100. There may be one or more module top plates 210. For an embodiment in which a plurality of battery modules 400 are disposed in each accommodating region, the module top plates 210 of two adjacent battery modules 400 may be connected to each other or integrally formed as one module top plate 210. Alternatively, the module top plates 210 in the plurality of accommodating regions are integrally formed as one module top plate 210. For example, for an embodiment in which the plurality of accommodating regions form a cross-shaped structure, the module top plates 210 may be in a cross shape.

In a fourth implementation, in each accommodating region, a first side plate 207 and a second side plate 208 opposite to each other may be further disposed between the first end plate 205 and the second end plate 206, and the first end plate 205, the second end plate 206, the first side plate 207, the second side plate 208, the module top plate 210, the module bottom plate 209, and the at least some cells 100 form the battery module 400. For example, in an embodiment in which the plurality of accommodating regions form a cross-shaped structure, the first side plate 207 in the center region 221 may be close to one of the fourth side edges 204, the second side plate 208 in the center region 221 may be close to the other of the fourth side edges 204, the first side plate 207 in the two side regions 222 may be close to the third side edge 203, and the second side plate 208 in the two side regions 222 may be close to the fourth side edge 204. That is, the first side plate 207 in the center region 221 may be adjacent to the second side plate 208 in the two side regions 222. The first side plate 207 and the second side plate 208 may be supported on the first side edge 201 and the second side edge 202, or may be fixed to the first side edge 201 and the second side edge 202, or may be fixed to the module bottom plate 209.

In a fifth implementation, in each accommodating region, the module bottom plate 209 is disposed below the at least some cells 100 of the plurality of cells 100, and the at least some cells are supported on the first side edge 201 and the second side edge 202 through the module bottom plate 209; and the module bottom plate 209 and the at least some cells 100 form the battery module 400. Herein, the module bottom plate 209 is mainly configured to cover the bottom of the cell 100, and the bottom of the cell 100 may be in contact with the module bottom plate 209 or may be spaced apart from the module bottom plate 209, so that a thermal insulating layer 215 or a heat preservation layer is disposed between the module bottom plate 209 and the cell 100. In this implementation, the plurality of cells 100 are supported on the first side edge 201 and the second side edge 202 through the module bottom plate 209, simplifying a structure of the battery module 400 and facilitating achievement of light weight of the power battery pack 700.

In the foregoing embodiment, the first end plate 205 and the second end plate 206, or the module bottom plate 209 may be supported on the first side edge 201 and the second side edge 202 through various implementations, which are not limited in the present disclosure. For example, the first end plate and the second end plate, or the module bottom plate may be detachably fastened on the first side edge 201 and the second side edge 202 through a fastener, or fixed to the first side edge 201 and the second side edge 202 through welding, or connected to the first side edge 201 and the second side edge 202 through adhesive dispensing, or directly placed on the first side edge 201 and the second side edge 202 and supported by the first side edge 201 and the second side edge 202.

For an embodiment in which the cells 100 are disposed in the accommodating device 200 through the battery modules 400, a plurality of layers of battery modules 400 are disposed along the third direction A3 in the power battery pack 700. In this way, the volume utilization of the accommodating device 200 may be improved, thereby improving the endurance capacity of the power battery pack 700. According to some embodiments of the present disclosure, the battery modules 400 stacked along the third direction A3 may be battery modules 400 having two ends fitting the first side edge 201 and the second side edge 202, or may be directly placed on the top of a lower layer of battery modules 400 and are not supported on, in a fitting manner, or connected to the first side edge 201 and the second side edge 202.

It should be noted that, regardless of whether the accommodating device 200 is the separately-produced vehicle tray for accommodating and mounting the cell 100 or the chamber 300 integrally formed with the chassis of the electric vehicle 800, the shape and structure thereof substantially remain the same. Structures such as the first end plate 205, the second end plate 206, the first side plate 207, and the second side plate 208 mentioned above mounted in the vehicle tray are also applicable to the chamber 300.

In the foregoing embodiments, for an embodiment in which the battery module 400 includes the module bottom plate 209, as shown in FIG. 12, a thermal insulating layer 215 may be disposed between the module bottom plate 209 and the cell 100, to insulate heat transfer between the cell 100 and the exterior to achieve heat preservation of the cell 100, and prevent thermal interference between an external environment of the accommodating device 200 and the cell 100 inside the accommodating device 200. According to some embodiments of the present disclosure, the thermal insulating layer 215 may be made of a material with thermal insulation and heat preservation functions, for example, being made of heat insulation cotton.

For an embodiment in which the battery module 400 includes the module top plate 210, a heat conducting plate 216 may be disposed between the module top plate 210 and the cell 100 to facilitate heat dissipation of the cell 100 and avoid an excessively large temperature difference between the plurality of cells 100. The heat conducting plate 216 may be made of a material with good thermal conductivity. For example, the heat conducting plate 216 may be made of a material such as copper or aluminum with high thermal conductivity.

In an implementation, the module top plate 210 is a liquid cooling plate 217 in which a cooling structure is disposed. A cooling liquid is provided in the liquid cooling plate 217, so that a temperature of the cell 100 is reduced through the cooling liquid, maintaining the cell 100 at a suitable operating temperature. Because the heat conducting plate 216 is disposed between the liquid cooling plate 217 and the cell 100, when the cell 100 is cooled through the cooling liquid, temperature differences between different positions of the liquid cooling plate 217 may be balanced through the heat conducting plate 216, thereby controlling temperature differences between the plurality of cells 100 to be within 1°C.

To improve the cooling effect of the liquid cooling plate 217, a gas-liquid separator may be disposed upstream of the liquid cooling plate 217. Because the cooling liquid in the liquid cooling plate 217 may come from another thermal management loop of the vehicle, the cooling liquid may be a gas-liquid cooling liquid. After the gas-liquid cooling liquid is separated into gas and liquid by the gas-liquid separator, it may be ensured that a cooling liquid in a pure liquid phase enters the liquid cooling plate 217 to cool the cell 100, ensuring the cooling effect.

In another implementation, the cell 100 may be further cooled through a cooling medium, the module top plate 210 is a direct cooling plate 218 in which a cooling structure is disposed, and a cooling medium is provided in the direct cooling plate 218. The cooling medium may be a cooling medium that is cooled through heat dissipation by a vehicle air-conditioning system. The low-temperature cooling medium may effectively absorb heat of the cell 100 and keep a temperature of the cell 100 constantly at an appropriate temperature value.

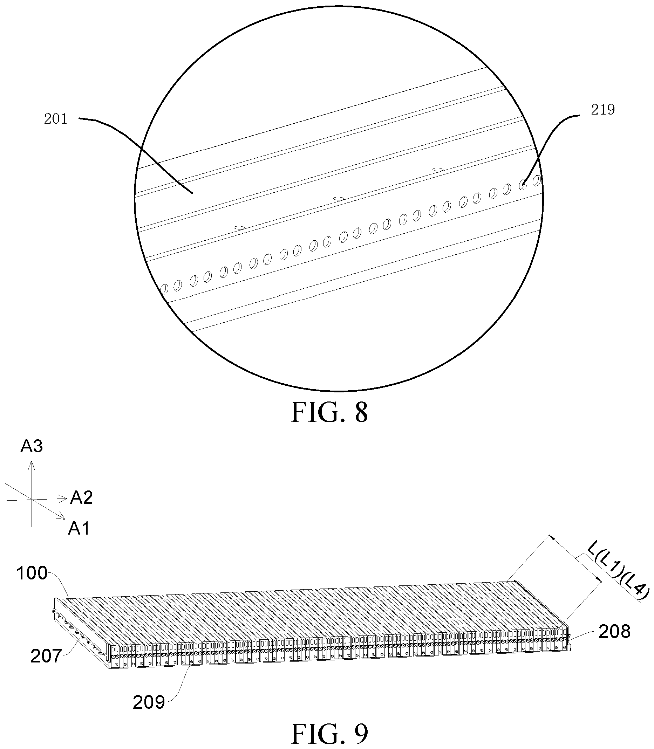

In addition, a specific structure of the accommodating device 200 is described again. To enable the first side edge 201 and the second side edge 202 to provide a support force for the cell 100, in an implementation provided in the present disclosure, as shown in FIG. 9, FIG. 11, and FIG. 12, in each accommodating region, the first side edge 201 is provided with a first supporting step 211, and the second side edge 202 is provided with a second supporting step 212. The first end of each cell 100 is supported on the corresponding first supporting step 211, and the second end of each cell 100 is supported on the corresponding second supporting step 212. According to some embodiments of the present disclosure, the first supporting step 211 may inwardly protrude from the bottom of the first side edge 201, and the second supporting step 212 may inwardly protrude from the bottom of the second side edge 202. Compared with the technical solution in which the cell is supported by using a bottom plate in the accommodating device in the related art, in the present disclosure, the cell 100 is supported by using the first supporting step 211 and the second supporting step 212 disposed on the first side edge 201 and the second side edge 202, which may simplify the structure of the accommodating device 200 provided in the present disclosure, and reduce the weight of the accommodating device 200. According to some embodiments of the present disclosure, insulating plates may be disposed on the first supporting step 211 and the second supporting step 212, and the insulating plates are located between the cell 100 and the first supporting step 211, and between the cell 100 and the second supporting step 212.

In some embodiments, the first side edge 201 is further provided with a first fixing portion 213, and the second side edge 202 is further provided with a second fixing portion 214. The first end of each cell 100 is fixed to the first fixing portion 213, and the second end of each cell 100 is fixed to the second fixing portion 214. According to some embodiments of the present disclosure, the first fixing portion 213 may be a third supporting step disposed on the first side edge 201, and the third supporting step is located above the first supporting step 211. The second fixing portion 214 may be a fourth supporting step disposed on the second side edge 202, and the fourth supporting step is located above the second supporting step 212. The first end and the second end of the cell may be fixed to the first fixing portion 213 and the second fixing portion 214 through a fastener, or welded on the first fixing portion 213 and the second fixing portion 214.

For an embodiment in which the cell 100 is mounted in the accommodating device 200 by using the battery module 400, and the battery module 400 includes the first end plate 205 disposed adjacent to the first side edge 201 and the second end plate 206 disposed adjacent to the second side edge 202, the bottom of the first end plate 205 may be supported on the first supporting step 211, and the top or side wall of the first end plate 205 may be fixed to the first fixing portion 213. The bottom of the second end plate 206 may be supported on the second supporting step 212, and the top or side wall of the second end plate 206 may be fixed to the second fixing portion 214.

When the power battery pack 700 provided in the present disclosure is arranged on an electric vehicle 800, in an implementation, the foregoing first direction A1 may be a width direction of a vehicle body, that is, a left-right direction of the vehicle, and the second direction A2 may be a length direction of the vehicle body of the vehicle, that is, a front-rear direction of the vehicle. In this way, because the cell 100 extends along the first direction A1, the cell 100 is used as a transverse reinforcing beam in the accommodating device 200. In another implementation provided in the present disclosure, the foregoing first direction A1 may be a length direction of a vehicle body of a vehicle, that is, a front-rear direction of the vehicle, and the second direction A2 may be a width direction of the vehicle body, that is, a left-right direction of the vehicle. In this way, because the cell 100 extends along the first direction A1, the cell 100 is used as a longitudinal reinforcing beam in the accommodating device 200.

According to another aspect of the present disclosure, an energy storage device 900 is provided, and the energy storage device 900 includes the foregoing power battery pack 700. The energy storage device 900 may be used for not only a passenger vehicle, but also devices that need to use a cell 100 to provide electric energy for the devices, such as a commercial vehicle, a special vehicle, a ship, backup power sources (dps, ups), an electric bicycle, an electric motorcycle, and an electric scooter.

According to still another aspect of the present disclosure, an electric vehicle 800 is provided, including the foregoing power battery pack 700. At least one accommodating device 200200 is formed on the electric vehicle 800, and the accommodating device 200 includes the foregoing chamber 300300 integrally formed on the electric vehicle 800.

According to still another aspect of the present disclosure, an electric vehicle 800 is provided, including the foregoing power battery pack 700. According to some embodiments of the present disclosure, an accommodating device 200 in the power battery pack 700 is a separately-produced vehicle tray for accommodating and mounting a cell 100.

The electric vehicle 800 herein may include electric vehicles 800 that need a power battery pack 700 to provide electric energy for driving the electric vehicles to travel, such as a commercial vehicle, a special vehicle, an electric bicycle, an electric motorcycle, and an electric scooter.

As an implementation, the power battery pack 700 is disposed at the bottom of the electric vehicle 800, and the accommodating device 200 is fixed to the chassis of the electric vehicle 800. Because the chassis of the electric vehicle 800 has a relatively large mounting space, as many as cells 100 may be accommodated by disposing the power battery pack 700 on the chassis of the electric vehicle 800, thereby improving the endurance capacity of the electric vehicle 800. Herein, there may be one or more power battery packs 700 disposed at the bottom of the electric vehicle 800.

According to some embodiments of the present disclosure, the electric vehicle 800 includes a power battery pack 700 disposed at the bottom of the electric vehicle 800, the accommodating device 200 is fixed to the chassis of the electric vehicle 800, and the plurality of cells 100 are arranged along the second direction A2 different from the first direction A1, the first direction A1 is a width direction of a vehicle body of the electric vehicle 800, and the second direction A2 is a length direction of the vehicle body of the electric vehicle 800.

According to some embodiments of the present disclosure, the electric vehicle 800 may include a plurality of power battery packs 700 disposed at the bottom of the electric vehicle 800. The plurality of power battery packs 700 may have the same or different shapes and sizes. Specifically, each power battery pack 700 may be adjusted according to a shape and a size of the chassis of the electric vehicle 800.

In some embodiments, the plurality of accommodating regions include a center region 221 and two side regions 222 located at two opposite sides of the center region 221, and a distance between the first side edge 201 and the second side edge 202 in the center region 221 is greater than a distance between the first side edge 201 and the second side edge 202 in the two side regions 222, so that the accommodating regions form a cross-shaped structure, and outer sides of the two side regions 222 along the second direction A2 correspond to wheel regions of the electric vehicle 800.

According to some embodiments of the present disclosure, a ratio of a width L3 of the center region 221 along the first direction A1 to a vehicle body width W meets 50%≤L3/W≤80%, the ratio may be achieved by disposing only one accommodating device 200 along the width direction of the vehicle body. Generally, for most vehicles, the vehicle body width is 500 mm to 2000 mm, for example, 500 mm, 1600 mm, 1800 mm, 2000 mm; the vehicle body length is 500 mm to 5000 mm. For a passenger vehicle, the width of the passenger vehicle is usually 500 mm to 1800 mm, and the length of the vehicle body is 500 mm to 4000 mm.

In an exemplary implementation provided in the present disclosure, a ratio of a length L4 of the cell 100 along the first direction A1 in the center region 221 to the vehicle body width W meets: 40%≤ L4/W≤70%. In consideration of thicknesses of a first side edge 201 and a second side edge 202 of the accommodating device 200, when the ratio of the length L4 of the cell 100100 in the first direction A1 to the vehicle body width W meets: 40%≤L4/W≤70%, the ratio may be achieved by disposing only one cell 100 along the width direction of the vehicle body. In another possible implementation, in a case that such a size requirement is met, the ratio may be achieved by disposing a plurality of battery modules 400 or a plurality of cells 100 in the length direction. As an implementation, the length L4 of the cell 100 in the first direction A1 is 500 mm to 1000 mm.

It should be noted that, in some embodiments of the present invention, although a solution in which two ends of a cell 100 are respectively supported on the first side edge 201 and the second side edge 202 through fitting is disclosed, in an actual production process, a cell 100 with a length matching the width of the vehicle body may not be manufactured. In other words, the cell 100 cannot be processed to have an expected length due to some reasons. This is because the electric vehicle 800 has some requirements on a voltage platform of the cell 100. With a fixed material system, to achieve a specific voltage platform, the cell 100 is required to have a fixed volume. Accordingly, if the length of the cell 100 is increased, the thickness or width thereof needs to be reduced. In addition, a surface area of the entire cell is to be ensured to improve heat dissipation. Under the premise, a length of the cell 100 cannot be increased by reducing a width (a height) of the cell 100. In this case, a height space of the cell in the vehicle body is utilized limitedly. In order to maximally reduce an effect, the width (the height) of the cell 100 is not adjusted generally. Therefore, the surface area of the entire cell 100 is changed only by changing the length of the cell 100 along the first direction A1 and the thickness thereof along the second direction A2. Therefore, to increase the length, the thickness is probably reduced. Actually, because a pole core and related materials need to be added to the interior of the cell 100, the thickness of the cell has a lower limit value. As a result, the length of the cell 100 along the first direction A1 can only be changed within a limited range due to the limit value of the thickness of the cell, and cannot be increased limitlessly.

Therefore, in some embodiments, the foregoing problem is resolved by disposing two cells 100 along the first direction A1. For example, in the original solution in which one cell 100 is disposed along the first direction A1, the length of the cell 100 along the first direction A1 is 1000 mm. After the solution is used, two cells 100 are disposed along the first direction A1, and a length of each cell 100 is about 450 mm. The length of the cell is less than a half of 1000 mm because a mounting position needs to be added in the middle.

## Claims

1. A power battery pack, comprising: an accommodating device (200) and a plurality of cells (100) disposed in the accommodating device (200), wherein the accommodating device (200) comprises a plurality of accommodating regions, each accommodating region has a first side edge (201) and a second side edge (202) disposed opposite to each other along a first direction (A1) and cells (100) disposed between the first side edge (201) and the second side edge (202), a distance between the first side edge (201) and the second side edge (202) along the first direction (A1) varies with different accommodating regions, each cell (100) comprises a first end and a second end opposite to each other, **characterized in that** a distance between the first end and the second end of at least one cell (100) matches a distance between a corresponding first side edge (201) and a corresponding second side edge (202).

2. The power battery pack according to claim 1, wherein the first end of the at least one cell (100) is supported on the corresponding first side edge (201), and the second end of the cell (100) is supported on the corresponding second side edge (202).

3. The power battery pack according to claim 1 or 2, wherein a length direction of the cell (100) is substantially perpendicular to the first side edge (201) and the second side edge (202); and in each accommodating region, the distance between the first end and the second end of the cell (100) is L1, and a distance between an inner surface of the first side edge (201) and an inner surface of the second side edge (202) is L2, wherein L1/L2≥50%.

4. The power battery pack according to any one of claims 1 to 3, wherein the plurality of accommodating regions comprise a center region (221) and two side regions (222) located at two opposite sides of the center region (221), and a distance between the first side edge (201) and the second side edge (202) in the center region (221) is greater than a distance between the first side edge (201) and the second side edge (202) in the two side regions (222), so that the plurality of accommodating regions form a cross-shaped structure, or
wherein the plurality of accommodating regions comprise a first region and a second region located at one side of the first region, and a distance between the first side edge (201) and the second side edge (202) in the first region is greater than a distance between the first side edge (201) and the second side edge (202) in the second region, so that the plurality of accommodating regions form a T-shaped structure.

5. The power battery pack according to any one of claims 1 to 4, wherein cells (100) in different accommodating regions have a same volume and/or a same capacity, wherein preferably:
the cell (100) is a prismatic cell and has a length (L), a thickness (D), and a height (H) between the length (L) and the thickness (D), the cell (100) is laterally and vertically, the cell (100) has the length direction being the first direction (A1), a thickness direction being a second direction (A2), and a height direction being a third direction (A3), the heights of the cells (100) in the different accommodating regions are the same, and a ratio between the lengths (L) of the cells (100) and a ratio between the thicknesses (D) of the cells (100) are reciprocals of each other.

6. The power battery pack according to any one of claims 3 to 5, wherein 80%≤L1/L2≤97%.

7. The power battery pack according to any one of claims 1 to 6, wherein the plurality of cells (100) are arranged along a second direction (A2) different from the first direction (A1, wherein preferably:
the power battery pack comprises a plurality of layers of cells (100) along a third direction (A3), and all the cells (100) in each layer are located between the first side edge (201) and the second side edge (202).

8. The power battery pack according to any one of claims 1 to 6, wherein a length direction of each of the plurality of cells (100) is parallel to the first direction (A1) or
wherein the first end of each cell (100) is fixed to the corresponding first side edge (201), and the second end of each cell (100) is fixed to the corresponding second side edge (202), or
wherein in each accommodating region, the first side edge (201) is provided with a first supporting step (211), and the second side edge (202) is provided with a second supporting step (212); and the first end of each cell (100) is supported on the corresponding first supporting step (211), and the second end of each cell (100) is supported on the corresponding second supporting step (212), or
wherein a first electrode (101) of the cell (100) is led out from the first end of the cell (100) facing the first side edge (201) and a second electrode (102) of the cell (100) is led out from the second end of the cell (100) facing the second side edge (202).

9. The power battery pack according to any one of claims 4 to 6, wherein the accommodating device (200) further comprises third side edges (203) and fourth side edges (204) disposed along a second direction (A2) different from the first direction (A1), one end, far away from the center region (221), of the first side edge (201) and one end, far away from the center region (221), of the second side edge (202) of the two side regions (222) are connected by the third side edge (203), and one end, close to the center region (221), of the first side edge (201) and one end, close to the center region (221), of the second side edge (202) of the two side regions (222) are respectively connected to the first side edge (201) and the second side edge (202) of the center region (221) by the fourth side edge (204), the cells (100) in the two side regions (222) are arranged between the third side edge (203) and the fourth side edge (204) along the second direction (A2), and the cell (100) in the center region (221) is arranged between the fourth side edges (204) along the second direction (A2), wherein preferably:
the third side edge (203) applies a force, which points toward the two side regions (222), to the cell (100) disposed adjacent to the third side edge (203), and the fourth side edge (204) applies a force, which points toward the center region (221), to the cell (100) disposed adjacent to the fourth side edge (204).

10. The power battery pack according to any one of claims 1 to 9, wherein in each accommodating region, a first end plate (205) is disposed between first ends of at least some cells (100) of the plurality of cells (100) and the first side edge (201), a second end plate (206) is disposed between second ends of the at least some cells (100) of the plurality of cells (100) and the second side edge (202), the first ends of the at least some cells (100) are supported on the first side edge (201) through the first end plate (205), and the second ends of the at least some cells (100) are supported on the second side edge (202) through the second end plate (206), wherein preferably:
in each accommodating region, a module bottom plate (209) is disposed below the at least some cells (100) of the plurality of cells (100), the module bottom plate (209) is connected between the first end plate (205) and the second end plate (206), and the module bottom plate (209), the first end plate (205), the second end plate (206), and the at least some cells (100) form the battery module (400).

11. The power battery pack according to claim 10, wherein in each accommodating region, a module top plate (210) is disposed above the at least some cells (100) of the plurality of cells (100), the module top plate (210) is connected between the first end plate (205) and the second end plate (206), and the module top plate (210), the module bottom plate (209), the first end plate (205), the second end plate (206), and the at least some cells (100) form the battery module (400), wherein preferably:
in each accommodating region, a first side plate (207) and a second side plate (208) opposite to each other are disposed between the first end plate (205) and the second end plate (206), and the first end plate (205), the second end plate (206), the first side plate (207), the second side plate (208), the module top plate (210), the module bottom plate (209), and the at least some cells (100) form the battery module (400).

12. The power battery pack according to any one of claims 1 to 11, wherein in each accommodating region, the module bottom plate (209) is disposed below the at least some cells (100) of the plurality of cells (100), and the at least some cells are supported on the first side edge (201) and the second side edge (202) through the module bottom plate (209); and the module bottom plate (209) and the at least some cells (100) form the battery module (400).

13. The power battery pack according to any one of claims 10 to 12, wherein there are at least two battery modules (400) in each accommodating region along a second direction (A2) different from the first direction (A1), or
wherein the power battery pack comprises a plurality of layers of battery modules (400) along a third direction (A3).

14. The power battery pack according to claim 7, wherein the cell (100) is a prismatic cell having a cuboid structure, and has a length (L), a thickness (D), and a height (H) between the length (L) and the thickness (D), each cell (100) is laterally and vertically, each cell (100) has a length direction being the first direction (A1), a thickness direction being the second direction (A2), and a height direction being the third direction (A3), and two adjacent cells (100) in each accommodating region are arranged with wide surfaces thereof facing each other, wherein preferably a ratio of the length (L) to the thickness (D) of the cell (100) meets: 50≤L/D≤70.

15. The power battery pack according to claim 14, wherein a ratio of a surface area (S) to a volume (V) of the cell (100) meets: 0.15≤S/V≤0.2.

16. The power battery pack according to any one of claims 14 to 15, wherein a ratio of the surface area (S) to energy (E) of the cell (100) meets: 250≤S/E≤400.

17. The power battery pack according to claim 8, wherein the first side edge (201) is provided with a first fixing portion (213), and the second side edge (202) is provided with a second fixing portion (214); and the first end of each cell (100) is fixed to the first fixing portion (213), and the second end of each cell (100) is fixed to the second fixing portion (214).

18. An electric vehicle or energy storage device, comprising a power battery pack according to any one of claims 1 to 17.

## Patentansprüche

1. Leistungsbatteriepack, umfassend: eine Aufnahmevorrichtung (200) und eine Vielzahl von Zellen (100), die in der Aufnahmevorrichtung (200) angeordnet sind, wobei die Aufnahmevorrichtung (200) eine Vielzahl von Aufnahmebereichen umfasst, wobei jeder Aufnahmebereich eine erste Seitenkante (201) und eine zweite Seitenkante (202) aufweist, die entlang einer ersten Richtung (A1) einander gegenüberliegend angeordnet sind, und Zellen (100) zwischen der ersten Seitenkante (201) und der zweiten Seitenkante (202) angeordnet sind, wobei ein Abstand zwischen der ersten Seitenkante (201) und der zweiten Seitenkante (202) entlang der ersten Richtung (A1) mit unterschiedlichen Aufnahmebereichen variiert, wobei jede Zelle (100) ein erstes Ende und ein zweites Ende umfasst, die einander gegenüberliegen, **dadurch gekennzeichnet, dass** ein Abstand zwischen dem ersten Ende und dem zweiten Ende mindestens einer Zelle (100) einem Abstand zwischen einer entsprechenden ersten Seitenkante (201) und einer entsprechenden zweiten Seitenkante (202) entspricht.

2. Leistungsbatteriepack gemäß Anspruch 1, wobei das erste Ende der mindestens einen Zelle (100) auf der entsprechenden ersten Seitenkante (201) abgestützt ist und das zweite Ende der Zelle (100) auf der entsprechenden zweiten Seitenkante (202) abgestützt ist.

3. Leistungsbatteriepack gemäß Anspruch 1 oder 2, wobei eine Längsrichtung der Zelle (100) im Wesentlichen senkrecht zur ersten Seitenkante (201) und zur zweiten Seitenkante (202) ist; und in jedem Aufnahmebereich der Abstand zwischen dem ersten Ende und dem zweiten Ende der Zelle (100) L1 beträgt und ein Abstand zwischen einer Innenfläche der ersten Seitenkante (201) und einer Innenfläche der zweiten Seitenkante (202) L2 beträgt, wobei L1/L2≥50%.

4. Leistungsbatteriepack gemäß einem der Ansprüche 1 bis 3, wobei die Vielzahl von Aufnahmebereichen einen Mittelbereich (221) und zwei Seitenbereiche (222) umfasst, die sich an zwei gegenüberliegenden Seiten des Mittelbereichs (221) befinden, und ein Abstand zwischen der ersten Seitenkante (201) und der zweiten Seitenkante (202) in dem Mittelbereich (221) größer ist als ein Abstand zwischen der ersten Seitenkante (201) und der zweiten Seitenkante (202) in den zwei Seitenbereichen (222), so dass die Vielzahl von Aufnahmebereichen eine kreuzförmige Struktur bilden, oder
wobei die Vielzahl von Aufnahmebereichen einen ersten Bereich und einen zweiten Bereich, der an einer Seite des ersten Bereichs angeordnet ist, umfasst und ein Abstand zwischen der ersten Seitenkante (201) und der zweiten Seitenkante (202) in dem ersten Bereich größer ist als ein Abstand zwischen der ersten Seitenkante (201) und der zweiten Seitenkante (202) in dem zweiten Bereich, so dass die Vielzahl von Aufnahmebereichen eine T-förmige Struktur bildet.

5. Leistungsbatteriepack gemäß einem der Ansprüche 1 bis 4, wobei Zellen (100) in verschiedenen Aufnahmebereichen ein gleiches Volumen und/oder eine gleiche Kapazität aufweisen, wobei vorzugsweise
die Zelle (100) eine prismatische Zelle ist und eine Länge (L), eine Dicke (D) und eine Höhe (H) zwischen der Länge (L) und der Dicke (D) aufweist, die Zelle (100) seitlich und vertikal ist, wobei die Zelle (100) eine Längenrichtung als die erste Richtung (A1), eine Dickenrichtung als eine zweite Richtung (A2) und eine Höhenrichtung als eine dritte Richtung (A3) aufweist, die Höhen der Zellen (100) in den verschiedenen Aufnahmebereichen gleich sind und ein Verhältnis zwischen den Längen (L) der Zellen (100) und ein Verhältnis zwischen den Dicken (D) der Zellen (100) reziproke Werte voneinander sind.

6. Leistungsbatteriepack gemäß einem der Ansprüche 3 bis 5, wobei 80 % ≤ L1/L2 ≤ 97 %.

7. Leistungsbatteriepack gemäß einem der Ansprüche 1 bis 6, wobei die Vielzahl von Zellen (100) entlang einer zweiten Richtung (A2) angeordnet ist, die sich von der ersten Richtung (A1) unterscheidet, wobei vorzugsweise
der Leistungsbatteriepack eine Vielzahl von Schichten von Zellen (100) entlang einer dritten Richtung (A3) umfasst und alle Zellen (100) in jeder Schicht zwischen der ersten Seitenkante (201) und der zweiten Seitenkante (202) angeordnet sind.

8. Leistungsbatteriepack gemäß einem der Ansprüche 1 bis 6, wobei eine Längsrichtung jeder der Vielzahl von Zellen (100) parallel zur ersten Richtung (A1) ist, oder
wobei das erste Ende jeder Zelle (100) an der entsprechenden ersten Seitenkante (201) befestigt ist und das zweite Ende jeder Zelle (100) an der entsprechenden zweiten Seitenkante (202) befestigt ist, oder
wobei in jedem Aufnahmebereich die erste Seitenkante (201) mit einer ersten Stützstufe (211) versehen ist und die zweite Seitenkante (202) mit einer zweiten Stützstufe (212) versehen ist; und das erste Ende jeder Zelle (100) auf der entsprechenden ersten Stützstufe (211) abgestützt ist und das zweite Ende jeder Zelle (100) auf der entsprechenden zweiten Stützstufe (212) abgestützt ist, oder
wobei eine erste Elektrode (101) der Zelle (100) aus dem ersten Ende der Zelle (100) herausgeführt ist, das der ersten Seitenkante (201) zugewandt ist, und eine zweite Elektrode (102) der Zelle (100) aus dem zweiten Ende der Zelle (100) herausgeführt ist, das der zweiten Seitenkante (202) zugewandt ist.

9. Leistungsbatteriepack gemäß einem der Ansprüche 4 bis 6, wobei die Aufnahmevorrichtung (200) ferner dritte Seitenränder (203) und vierte Seitenränder (204) umfasst, die entlang einer zweiten Richtung (A2) angeordnet sind, die sich von der ersten Richtung (A1) unterscheidet, wobei ein Ende, das weit von dem Mittelbereich (221) der ersten Seitenkante (201) entfernt ist, mit einem Ende, das weit von dem Mittelbereich (221) der zweiten Seitenkante (202) der beiden Seitenbereiche (222) entfernt ist, durch die dritte Seitenkante (203) verbunden ist, und ein Ende, nahe dem Mittelbereich (221) der ersten Seitenkante (201), und ein Ende nahe dem Mittelbereich (221) der zweiten Seitenkante (202) der beiden Seitenbereiche (222) jeweils durch die vierte Seitenkante (204) mit der ersten Seitenkante (201) und der zweiten Seitenkante (202) des Mittelbereichs (221) verbunden sind, wobei die Zellen (100) in den beiden Seitenbereichen (222) zwischen der dritten Seitenkante (203) und der vierten Seitenkante (204) entlang der zweiten Richtung (A2) angeordnet sind und die Zelle (100) in dem Mittelbereich (221) zwischen den vierten Seitenkanten (204) entlang der zweiten Richtung (A2) angeordnet ist, wobei vorzugsweise:
die dritte Seitenkante (203) eine Kraft, die in Richtung der beiden Seitenbereiche (222) zeigt, auf die Zelle (100) ausübt, die angrenzend an die dritte Seitenkante (203) angeordnet ist, und die vierte Seitenkante (204) eine Kraft, die in Richtung des Mittelbereichs (221) zeigt, auf die Zelle (100) ausübt, die angrenzend an die vierte Seitenkante (204) angeordnet ist.

10. Leistungsbatteriepack gemäß einem der Ansprüche 1 bis 9, wobei in jedem Aufnahmebereich eine erste Endplatte (205) zwischen ersten Enden von mindestens einigen Zellen (100) der Vielzahl von Zellen (100) und der ersten Seitenkante (201) angeordnet ist, eine zweite Endplatte (206) zwischen zweiten Enden der mindestens einigen Zellen (100) der Vielzahl von Zellen (100) und der zweiten Seitenkante (202) angeordnet ist, die ersten Enden der mindestens einigen Zellen (100) durch die erste Endplatte (205) an der ersten Seitenkante (201) abgestützt sind und die zweiten Enden der mindestens einigen Zellen (100) durch die zweite Endplatte (206) an der zweiten Seitenkante (202) abgestützt sind, wobei vorzugsweise:
in jedem Aufnahmebereich eine Modulbodenplatte (209) unter den mindestens einigen Zellen (100) der Vielzahl von Zellen (100) angeordnet ist, die Modulbodenplatte (209) zwischen der ersten Endplatte (205) ) und der zweiten Endplatte (206) verbunden ist, und die Modulbodenplatte (209), die erste Endplatte (205), die zweite Endplatte (206) und zumindest einige Zellen (100) das Batteriemodul (400) bilden.

11. Leistungsbatteriepack gemäß Anspruch 10, wobei in jedem Aufnahmebereich eine Moduldeckplatte (210) über den mindestens einigen Zellen (100) der Vielzahl von Zellen (100) angeordnet ist, die Moduldeckplatte (210) zwischen der ersten Endplatte (205) und der zweiten Endplatte (206) verbunden ist, und die Moduldeckplatte (210), die Modulbodenplatte (209), die erste Endplatte (205), die zweite Endplatte (206) und die mindestens einigen Zellen (100) das Batteriemodul (400) bilden, wobei vorzugsweise:
in jedem Aufnahmebereich eine erste Seitenplatte (207) und eine zweite Seitenplatte (208), die einander gegenüberliegen, zwischen der ersten Endplatte (205) und der zweiten Endplatte (206) angeordnet sind, und die erste Endplatte (205), die zweite Endplatte (206), die erste Seitenplatte (207), die zweite Seitenplatte (208), die Moduldeckplatte (210), die Modulbodenplatte (209) und die mindestens einigen Zellen (100) das Batteriemodul (400) bilden.

12. Leistungsbatteriepack gemäß einem der Ansprüche 1 bis 11, wobei in jedem Aufnahmebereich die Modulbodenplatte (209) unter den mindestens einigen Zellen (100) der Vielzahl von Zellen (100) angeordnet ist und die mindestens einigen Zellen durch die Modulbodenplatte (209) an der ersten Seitenkante (201) und der zweiten Seitenkante (202) abgestützt sind; und die Modulbodenplatte (209) und die mindestens einigen Zellen (100) das Batteriemodul (400) bilden.

13. Leistungsbatteriepack gemäß einem der Ansprüche 10 bis 12, wobei es mindestens zwei Batteriemodule (400) in jedem Aufnahmebereich entlang einer zweiten Richtung (A2) gibt, die sich von der ersten Richtung (A1) unterscheidet, oder
wobei das Leistungsbatteriepack eine Vielzahl von Schichten von Batteriemodulen (400) entlang einer dritten Richtung (A3) umfasst.

14. Leistungsbatteriepack gemäß Anspruch 7, wobei die Zelle (100) eine prismatische Zelle mit einer quaderförmigen Struktur ist und eine Länge (L), eine Dicke (D) und eine Höhe (H) zwischen der Länge (L) und der Dicke (D) aufweist, wobei jede Zelle (100) seitlich und vertikal ist, wobei jede Zelle (100) eine Längenrichtung als die erste Richtung (A1), eine Dickenrichtung als die zweite Richtung (A2) und eine Höhenrichtung als die dritte Richtung (A3) aufweist, und zwei benachbarte Zellen (100) in jedem Aufnahmebereich mit breiten Oberflächen einander zugewandt angeordnet sind, wobei vorzugsweise ein Verhältnis der Länge (L) zur Dicke (D) der Zelle (100) 50≤L/D≤70 erfüllt.

15. Leistungsbatteriepack gemäß Anspruch 14, wobei ein Verhältnis einer Oberfläche (S) zu einem Volumen (V) der Zelle (100) 0,15 ≤ S/V ≤ 0,2 erfüllt.

16. Leistungsbatteriepack gemäß einem der Ansprüche 14 bis 15, wobei ein Verhältnis der Oberfläche (S) zur Energie (E) der Zelle (100) 250≤S/E≤400 erfüllt.

17. Leistungsbatteriepack gemäß Anspruch 8, wobei die erste Seitenkante (201) mit einem ersten Befestigungsabschnitt (213) versehen ist und die zweite Seitenkante (202) mit einem zweiten Befestigungsabschnitt (214) versehen ist; und das erste Ende jeder Zelle (100) an dem ersten Befestigungsabschnitt (213) befestigt ist und das zweite Ende jeder Zelle (100) an dem zweiten Befestigungsabschnitt (214) befestigt ist.

18. Elektrofahrzeug oder Energiespeichergerät, das einen Leistungsbatteriepack gemäß einem der Ansprüche 1 bis 17 umfasst.

## Revendications

1. Un bloc de batterie d'alimentation, comprenant : un dispositif de logement (200) et une pluralité de cellules (100) disposées dans le dispositif de logement (200), dans lequel le dispositif de logement (200) comprend une pluralité de régions de logement, chaque région de logement a un premier bord latéral (201) et un deuxième bord latéral (202) disposés à l'opposé l'un de l'autre le long d'une première direction (A1) et des cellules (100) disposées entre le premier bord latéral (201) et le deuxième bord latéral (202), une distance entre le premier bord latéral (201) et le deuxième bord latéral (202) le long de la première direction (A1) varie en fonction des différentes régions de logement, chaque cellule (100) comprend une première extrémité et une deuxième extrémité opposées l'une à l'autre, **caractérisée en ce qu'**une distance entre la première extrémité et la deuxième extrémité d'au moins une cellule (100) met en correspondance une distance entre un premier bord latéral correspondant (201) et un deuxième bord latéral correspondant (202).

2. Bloc de batterie d'alimentation selon la revendication 1, dans lequel la première extrémité d'au moins une cellule (100) est appuyée sur le premier bord latéral correspondant (201), et la deuxième extrémité de la cellule (100) est appuyée sur le deuxième bord latéral correspondant (202).

3. Bloc de batterie d'alimentation selon la revendication 1 ou 2, dans lequel une direction de longueur de la cellule (100) est sensiblement perpendiculaire au premier bord latéral (201) et au deuxième bord latéral (202) ; et dans chaque région de logement, la distance entre la première extrémité et la deuxième extrémité de la cellule (100) est L1, et une distance entre une surface intérieure du premier bord latéral (201) et une surface intérieure du deuxième bord latéral (202) est L2, dans laquelle L1/L2≥50%.

4. Bloc de batterie d'alimentation selon l'une quelconque des revendications 1 à 3, dans lequel la pluralité de régions de logement comprend une région centrale (221) et deux régions latérales (222) situées sur deux côtés opposés de la région centrale (221), et une distance entre le premier bord latéral (201) et le deuxième bord latéral (202) dans la région centrale (221) est supérieure à une distance entre le premier bord latéral (201) et le deuxième bord latéral (202) dans les deux régions latérales (222), de telle sorte que la pluralité de régions de logement forme une structure en forme de croix, ou
dans lequel la pluralité de régions de logement comprend une première région et une deuxième région située sur un côté de la première région, et une distance entre le premier bord latéral (201) et le deuxième bord latéral (202) dans la première région est supérieure à une distance entre le premier bord latéral (201) et le deuxième bord latéral (202) dans la deuxième région, de sorte que la pluralité de régions de logement forme une structure en forme de T.

5. Bloc de batterie d'alimentation selon l'une quelconque des revendications 1 à 4, dans lequel les cellules (100) dans différentes régions de logement ont un même volume et/ou une même capacité, dans lequel de préférence :
la cellule (100) est une cellule prismatique et a une longueur (L), une épaisseur (D), et une hauteur (H) entre la longueur (L) et l'épaisseur (D), la cellule (100) est latéralement et verticalement, la cellule (100) a la direction de la longueur étant la première direction (A1), une direction de l'épaisseur étant une deuxième direction (A2), et une direction de hauteur étant une troisième direction (A3), les hauteurs des cellules (100) dans les différentes régions de logement sont les mêmes, et un rapport entre les longueurs (L) des cellules (100) et un rapport entre les épaisseurs (D) des cellules (100) sont réciproques l'un de l'autre.

6. Bloc de batterie d'alimentation selon l'une quelconque des revendications 3 à 5, dans lequel 80%≤L1/L2≤97%.

7. Bloc de batterie d'alimentation selon l'une quelconque des revendications 1 à 6, dans lequel la pluralité de cellules (100) est disposée le long d'une deuxième direction (A2) différente de la première direction (A1), dans lequel, de préférence :
le bloc de batterie d'alimentation comprend une pluralité de couches de cellules (100) le long d'une troisième direction (A3), et toutes les cellules (100) de chaque couche sont situées entre le premier bord latéral (201) et le deuxième bord latéral (202).

8. Bloc de batterie d'alimentation selon l'une quelconque des revendications 1 à 6, dans lequel une direction de longueur de chacune des cellules (100) de la pluralité de cellules est parallèle à la première direction (A1) ou
dans lequel la première extrémité de chaque cellule (100) est fixée au premier bord latéral correspondant (201), et la deuxième extrémité de chaque cellule (100) est fixée au deuxième bord latéral correspondant (202), ou
dans lequel, dans chaque région de logement, le premier bord latéral (201) est prévu avec une première marche de support (211), et le deuxième bord latéral (202) est prévu avec une deuxième marche de support (212) ; et la première extrémité de chaque cellule (100) est appuyée sur la première marche de support (211) correspondante, et la deuxième extrémité de chaque cellule (100) est appuyée sur la deuxième marche de support (212) correspondante, ou
dans lequel une première électrode (101) de la cellule (100) sort de la première extrémité de la cellule (100) faisant face au premier bord latéral (201) et une deuxième électrode (102) de la cellule (100) sort de la deuxième extrémité de la cellule (100) faisant face au deuxième bord latéral (202).

9. Bloc de batterie d'alimentation selon l'une quelconque des revendications 4 à 6, dans lequel le dispositif de logement (200) comprend en outre des troisièmes bords latéraux (203) et des quatrièmes bords latéraux (204) disposés le long d'une deuxième direction (A2) différente de la première direction (A1), une extrémité du premier bord latéral (203), éloignée de la région centrale (221), et une extrémité, éloignée de la région centrale (221), du deuxième bord latéral (202) des deux régions latérales (222) sont reliées par le troisième bord latéral (203), et une extrémité, proche de la région centrale (221), du premier bord latéral (201) et une extrémité, proche de la région centrale (221), du deuxième bord latéral (202) des deux régions latérales (222) sont respectivement reliées au premier bord latéral (201) et au deuxième bord latéral (202) de la région centrale (221) par le quatrième bord latéral (204), les cellules (100) dans les deux régions latérales (222) sont disposées entre le troisième bord latéral (203) et le quatrième bord latéral (204) le long de la deuxième direction (A2), et la cellule (100) dans la région centrale (221) est disposée entre les quatrièmes bords latéraux (204) le long de la deuxième direction (A2), dans lequel de préférence :
le troisième bord latéral (203) applique une force, qui pointe vers les deux régions latérales (222), à la cellule (100) disposée à côté du troisième bord latéral (203), et le quatrième bord latéral (204) applique une force, qui pointe vers la région centrale (221), à la cellule (100) disposée à côté du quatrième bord latéral (204).

10. Bloc de batterie d'alimentation selon l'une quelconque des revendications 1 à 9, dans lequel, dans chaque région de logement, une première plaque d'extrémité (205) est disposée entre les premières extrémités d'au moins certaines cellules (100) de la pluralité de cellules (100) et le premier bord latéral (201), une deuxième plaque d'extrémité (206) est disposée entre les deuxièmes extrémités d'au moins certaines cellules (100) de la pluralité de cellules (100) et le deuxième bord latéral (202), les premières extrémités des au moins quelques cellules (100) sont appuyées sur le premier bord latéral (201) à travers la première plaque d'extrémité (205), et les deuxièmes extrémités des au moins quelques cellules (100) sont appuyées sur le deuxième bord latéral (202) à travers la deuxième plaque d'extrémité (206), dans lequel, de préférence :
dans chaque région de logement, une plaque de fond de module (209) est disposée sous les au moins quelques cellules (100) de la pluralité de cellules (100), la plaque de fond de module (209) est reliée entre la première plaque d'extrémité (205) et la deuxième plaque d'extrémité (206), et la plaque de fond de module (209), la première plaque d'extrémité (205), la deuxième plaque d'extrémité (206), et les au moins quelques cellules (100) forment le module de batterie (400).

11. Bloc de batterie d'alimentation selon la revendication 10, dans lequel dans chaque région de logement, une plaque supérieure de module (210) est disposée au-dessus des au moins quelques cellules (100) de la pluralité de cellules (100), la plaque supérieure de module (210) est connectée entre la première plaque d'extrémité (205) et la deuxième plaque d'extrémité (206), et la plaque supérieure de module (210), la plaque de fond de module (209), la première plaque d'extrémité (205), la deuxième plaque d'extrémité (206), et les au moins quelques cellules (100) forment le module de batterie (400), dans lequel, de préférence, :
dans chaque région de logement, une première plaque latérale (207) et une deuxième plaque latérale (208) opposées l'une à l'autre sont disposées entre la première plaque d'extrémité (205) et la deuxième plaque d'extrémité (206), et la première plaque d'extrémité (205), la deuxième plaque d'extrémité (206), la première plaque latérale (207), la deuxième plaque latérale (208), la plaque supérieure du module (210), la plaque de fond du module (209), et les au moins quelques cellules (100) forment le module de batterie (400).

12. Bloc de batterie d'alimentation selon l'une quelconque des revendications 1 à 11, dans lequel, dans chaque région de logement, la plaque de fond de module (209) est disposée sous au moins quelques cellules (100) de la pluralité de cellules (100), et les au moins quelques cellules sont appuyées sur le premier bord latéral (201) et le deuxième bord latéral (202) par la plaque de fond de module (209) ; et la plaque de fond de module (209 ), et les au moins quelques cellules forment le module de batterie (400).

13. Bloc de batterie d'alimentation selon l'une quelconque des revendications 10 à 12, dans lequel il y a au moins deux modules de batterie (400) dans chaque région de logement le long d'une deuxième direction (A2) différente de la première direction (A1), ou.
dans lequel le bloc de batterie d'alimentation comprend une pluralité de couches de modules de batterie (400) le long d'une troisième direction (A3).

14. Bloc de batterie d'alimentation selon la revendication 7, dans lequel la cellule (100) est une cellule prismatique ayant une structure cuboïdale, et a une longueur (L), une épaisseur (D), et une hauteur (H) entre la longueur (L) et l'épaisseur (D), chaque cellule (100) est latéralement et verticalement, chaque cellule (100) a une direction de longueur étant la première direction (A1), une direction d'épaisseur étant la deuxième direction (A2), et une direction de hauteur étant la troisième direction (A3), et deux cellules adjacentes (100) dans chaque région de logement sont disposées avec des surfaces larges de celles-ci se faisant face, dans lequel de préférence un rapport entre la longueur (L) et l'épaisseur (D) de la cellule (100) respecte : 50≤L/D≤70.

15. Bloc de batterie d'alimentation selon la revendication 14, dans lequel un rapport entre une surface (S) et un volume (V) de la cellule (100) respecte : 0,15≤S/V≤0,2.

16. Bloc de batterie d'alimentation selon l'une quelconque des revendications 14 à 15, dans lequel un rapport de la surface (S) sur l'énergie (E) de la cellule (100) respecte : 250≤S/E≤400.

17. Bloc de batterie d'alimentation selon la revendication 8, dans lequel le premier bord latéral (201) est prévu avec une première partie de fixation (213), et le deuxième bord latéral (202) est prévu avec une deuxième partie de fixation (214) ; et la première extrémité de chaque cellule (100) est fixée à la première partie de fixation (213), et la deuxième extrémité de chaque cellule (100) est fixée à la deuxième partie de fixation (214).

18. Véhicule électrique ou dispositif de stockage d'énergie, comprenant un bloc de batterie d'alimentation selon l'une quelconque des revendications 1 à 17.
